(19) Europäisches Patentamt
European Patent Office
Office européen des brevets

(11) **EP 3 130 774 B1**

(12) **EUROPEAN PATENT SPECIFICATION**

(45) Date of publication and mention
of the grant of the patent:
**18.07.2018 Bulletin 2018/29**

(51) Int Cl.:
***F01N 3/035*** *(2006.01)*      ***F01N 3/20*** *(2006.01)*
***F01N 3/021*** *(2006.01)*

(21) Application number: **16180408.3**

(22) Date of filing: **20.07.2016**

(54) **EXHAUST GAS PURIFICATION SYSTEM FOR INTERNAL COMBUSTION ENGINE**

ABGASREINIGUNGSSYSTEM FÜR EINEN VERBRENNUNGSMOTOR

SYSTÈME DE PURIFICATION DE GAZ D'ÉCHAPPEMENT POUR MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2015 JP 2015158057**

(43) Date of publication of application:
**15.02.2017 Bulletin 2017/07**

(73) Proprietor: **Toyota Jidosha Kabushiki Kaisha Toyota-shi, Aichi-ken, 471-8571 (JP)**

(72) Inventors:
- **MATSUO, Junichi**
  **Aichi-ken, 471-8571 (JP)**
- **OHASHI, Nobumoto**
  **Aichi-ken, 471-8571 (JP)**
- **MIKAMI, Akira**
  **Aichi-ken, 471-8571 (JP)**
- **TAKADA, Keishi**
  **Aichi-ken, 471-8571 (JP)**
- **NAKAYAMA, Shigeki**
  **Aichi-ken, 471-8571 (JP)**

(74) Representative: **J A Kemp**
**14 South Square**
**Gray's Inn**
**London WC1R 5JJ (GB)**

(56) References cited:
EP-A1- 1 852 582      EP-A1- 2 787 186
WO-A1-2008/092691      US-A1- 2014 311 443

**Description**

TECHNICAL FIELD

The present invention relates to an exhaust gas purification system for an internal combustion engine.

BACKGROUND ART

EP 2,787,186 A describes an exhaust gas purification device, which purifies exhaust gas in first and second exhaust paths extending from an internal combustion engine. The device includes a convergence path extending from the area of convergence of the first and second exhaust paths, a first auxiliary NOx catalyst provided in the first exhaust path, a second auxiliary NOx catalyst provided in the second exhaust path, a main NOx catalyst provided in the convergence path, a first addition section), which adds an ammonia source in a first addition amount to a section upstream of the first auxiliary NOx catalyst, thereby supplying urea water to the first auxiliary NOx catalyst, and a second addition section, which adds an ammonia source in a second addition amount to a section upstream of the second auxiliary NOx catalyst, thereby supplying urea water to the second auxiliary NOx catalyst. EP 1,852,582 A describes an oxidation catalytic converter placed in exhaust gas manifold section which converts nitric oxide contained in exhaust gas into nitrogen oxide. A hydrolysis catalytic converter is placed in exhaust gas manifold section. The downstream of catalytic converters are provided with manifold sections which are discharged into a common main exhaust gas manifold. The reduction agent containing ammonia is supplied into manifold section which is placed upstream of hydrolysis catalytic converter, by a nozzle. There has been known an internal combustion engine system having two banks of cylinders in which two auxiliary exhaust paths merging with each other at a downstream side thereof are connected to the two banks of cylinders, respectively, and in which a main exhaust path is connected to a merging portion of the auxiliary exhaust paths, and a urea addition valve and an auxiliary NOx selective catalytic reduction catalyst are arranged in each of the auxiliary exhaust paths, and in which a main NOx selective catalytic reduction catalyst is arranged in the main exhaust path. In addition, it has been proposed that at the time of starting of an internal combustion engine in the internal combustion engine system, etc., the temperature of the main NOx selective catalytic reduction catalyst is raised at an early stage, by decreasing an amount of addition of urea from one of the urea addition valves and increasing an amount of addition of urea from the other of the urea addition valves (refer to a first patent literature).

CITATION LIST

PATENT LITERATURE

First Patent Literature: Japanese patent laid-open publication No. 2013-113194

SUMMARY OF THE INVENTION

TECHNICAL PROBLEM

An internal combustion engine is provided with a first exhaust passage and a second exhaust passage connected to a first group of cylinders and a second group of cylinders, respectively, and a third exhaust passage connected to a downstream side merging portion of the first exhaust passage and the second exhaust passage, wherein a PM (Particulate Matter) filter, an NSR (NOx Storage Reduction) catalyst and so on may be arranged in each of the first and second exhaust passages of an exhaust gas purification system in which first through third NOx selective catalytic reduction catalysts are arranged in the first through third exhaust passages, respectively. In the exhaust gas purification system with which the PM filter, the NSR catalyst and so on (hereinafter referred to as the filter, etc.) are arranged in each of the first and second exhaust passages, the temperature of the filter, etc., will be suitably raised in order to oxidize and remove the PM deposited in the PM filter, the sulfur attached to the catalyst, etc.

When the temperature of the filter, etc., being arranged in the first exhaust passage is raised, the temperature of the first NOx selective catalytic reduction catalyst will also go up. In addition, when the temperature of the filter, etc., being arranged in the second exhaust passage is raised, the temperature of the second NOx selective catalytic reduction catalyst will also go up. Then, as the temperatures of the first and second NOx selective catalytic reduction catalysts become high, the NOx reduction performances thereof will decrease, and when urea water is added into the exhaust passages of which the temperatures have become high by means of temperature rise control, the ammonia produced by the hydrolysis of the urea water may be oxidized to NOx in the high temperature portions in the exhaust passages.

For that reason, it can be considered that the exhaust gas purification system having such an arrangement as mentioned above is controlled so that temperature rise control for raising the temperature of the filter, etc., at the side of the first exhaust passage, and temperature rise control for raising the temperature of the filter, etc., at the side of the second exhaust passage are not carried out in the same period of time, and the addition of urea water into the first exhaust passage is stopped during the temperature rise control for one of the filter, etc., e.g., during the temperature rise control for the filter, etc., at the side of the first exhaust passage. However, if the addition of urea water into the first exhaust passage is only stopped during the temperature rise control of the filter, etc., at the side of the first exhaust passage, the rate of consumption (i.e., the amount of consumption per unit time) by the reaction of the ammonia adsorbed to the third NOx selective catalytic reduction catalyst with NOx will become larger than the rate of replenishment of ammonia to the third NOx selective catalytic reduction catalyst. For that reason, if the addition of the urea water into the first exhaust passage is only stopped, the NOx reduction performance as the exhaust gas purification system can not be maintained during the temperature rise control of the filter, etc., at the side of the first exhaust passage.

If the addition of the urea water into the first exhaust passage is stopped during the temperature rise control of the filter, etc., at the side of the first exhaust passage, and at the same time, if the amount of addition of the urea water into the second exhaust passage is increased (e.g., increased twice), it will become possible to remove or reduce NOx from the side of the first cylinder group by means of the third NOx selective catalytic reduction catalyst during the temperature rise control of the filter, etc., at the side of the first exhaust passage. However, at the time of the temperature rise control of the filter, etc., at the side of the first exhaust passage, the temperature of the first NOx selective catalytic reduction catalyst goes up, and the ammonia adsorbed therein desorbs from the first NOx selective catalytic reduction catalyst. Then, even if ammonia has not at all been adsorbed to the third NOx selective catalytic reduction catalyst, but when a large amount of ammonia flows into the third NOx selective catalytic reduction catalyst in unit time, ammonia slip will occur in the third NOx selective catalytic reduction catalyst. Here, note that the ammonia slip is a phenomenon in which a part of ammonia having flowed in the catalyst is discharged therefrom without being adsorbed to the catalyst.

Accordingly, in cases where the addition of the urea water into the first exhaust passage is stopped during the temperature rise control of the filter, etc., at the side of the first exhaust passage, and at the same time, the amount of addition of the urea water into the second exhaust passage is increased, there is a fear that an excessive amount of ammonia may flow into the third NOx selective catalytic reduction catalyst, and a part of ammonia having flowed therein may be discharged without being adsorbed to the third NOx selective catalytic reduction catalyst.

Thus, the object of the present invention is to provide an exhaust gas purification system for an internal combustion engine which includes a first exhaust passage and a second exhaust passage connected to a first group of cylinders and a second group of cylinders, respectively, and a third exhaust passage connected to a downstream side merging portion of the first exhaust passage and the second exhaust passage, with first through third NOx selective catalytic reduction catalysts being arranged in the first through third exhaust passages, respectively, wherein in cases where the temperature of the first NOx selective catalytic reduction catalyst is made to rise in accordance with the temperature rise of a filter or catalyst arranged in the first exhaust passage, it is possible to suppress an excessive amount of ammonia from flowing into the third NOx selective catalytic reduction catalyst within unit time.

SOLUTION TO PROBLEM

In order to solve the above-mentioned object, an exhaust gas purification system for an internal combustion engine having a first cylinder group and a second cylinder group according to the present invention is defined in appended claim 1.

That is, in the exhaust gas purification system for an internal combustion engine of the present invention, the first temperature rise control to raise the temperature of the filter or catalyst arranged in the first exhaust passage, and the second temperature rise control to raise the temperature of the filter or catalyst arranged in the second exhaust passage are carried out at different times. Then, in the exhaust gas purification system for an internal combustion engine of the present invention, in a period of time after the first temperature rise control is started and until the amount of ammonia desorbing from the first NOx selective catalytic reduction catalyst per unit time in accordance with the temperature rise of the filter or catalyst arranged in the first exhaust passage due to the first temperature rise control becomes equal to or less than the predetermined amount (hereinafter referred to as a first period of time), ammonia source of an amount smaller than the first basic addition amount (i.e., the basic amount of the ammonia source to be added by the first addition valve which is decided according to the amount of NOx flowing into the first NOx selective catalytic reduction catalyst) is added from the first addition valve. In addition, during the first period of time, ammonia source of the second basic addition amount (i.e., the basic amount of the ammonia source to be added by the second addition valve which is decided according to the amount of NOx flowing into the second NOx selective catalytic reduction catalyst) is added from the second addition valve. Accordingly, in the exhaust gas purification system for an internal combustion engine of the present invention, the amount of ammonia flowing into the third NOx selective catalytic reduction catalyst in unit time during the temperature rise by the first temperature rise control of the filter or catalyst in the first exhaust passage becomes smaller than in cases where the amount of addition of the ammonia source from the first addition valve is made less than the first basic addition amount at the time of the start of the first temperature rise control and where the amount of addition of the ammonia source from the second addition valve is made larger than the second basic addition amount. Accordingly, according to the exhaust gas purification system for an internal combustion engine of the present invention, in cases where the temperature of the first NOx selective catalytic reduction catalyst is made to rise in accordance with the temperature rise of the filter or catalyst arranged in the first exhaust passage, it is possible to suppress an excessive amount of ammonia from flowing into the third NOx selective catalytic reduction catalyst in unit time. In addition, as a result, it is possible to suppress the occurrence of ammonia slip in the third NOx selective catalytic reduction catalyst.

Here, note that according to the above arrangement or configuration, in the exhaust gas purification system for an internal combustion engine of the present invention, the amounts of the ammonia source added from the first and second addition valves during the first period of time become an amount smaller than that usually consumed by the removal (reduction) of NOx discharged from the first cylinder group and the second cylinder group of the internal combustion engine. However, the ammonia slip will be suppressed when the amount of ammonia flowing into the third NOx selective catalytic reduction catalyst in unit time is not excessive, so that the ammonia having desorbed from the first NOx selective catalytic reduction catalyst in accordance with the temperature rise due to the first temperature rise control of the filter or catalyst arranged in the first exhaust passage adsorbs to the third NOx selective catalytic reduction catalyst in an efficient manner. Accordingly, the decrease in NOx removal (reduction) performance of the third NOx selective catalytic reduction catalyst in the first period of time is alleviated by the adsorption of the ammonia desorbed from the first NOx selective catalytic reduction catalyst. Then, in the exhaust gas purification system for an internal combustion engine of the present invention, in a period of time (hereinafter, referred to as a second period of time) after the first period of time is terminated (i.e., after the amount of ammonia per unit time becomes equal to or less than the predetermined amount) and until the temperature of the first NOx selective catalytic reduction catalyst becomes less than a preset temperature at which the reduction of NOx substantially becomes possible by the adsorption of ammonia after the first temperature rise control is terminated, ammonia source of an amount smaller than the first basic addition amount is added from the first addition valve, and ammonia source of an amount larger than the second basic addition amount is added from the second addition valve. That is, in the exhaust gas purification system for an internal combustion engine of the present invention, when the first period of time expires and the second period of time comes, the amount of addition of the ammonia source from the second addition valve is increased. Accordingly, in the exhaust gas purification system for an internal combustion engine of the present invention, it becomes possible to suppress not only an excessive decrease in the amount of ammonia adsorbed in the third NOx selective catalytic reduction catalyst during the first period of time, but also the discharge of NOx from the third NOx selective catalytic reduction catalyst during the second period of time (and the first period of time).

In addition, in the exhaust gas purification system for an internal combustion engine of the present invention, ammonia source of an amount smaller than the first basic addition amount is added from the first addition valve, after the start of the first temperature rise control, in the period of time after the first temperature rise control is terminated and until the temperature of the first NOx selective catalytic reduction catalyst becomes less than the preset temperature. Accordingly, in the exhaust gas purification system for an internal combustion engine of the present invention, the ammonia source will not be added into the first exhaust passage which has become a high temperature, and hence, the amount of NOx flowing into the third NOx selective catalytic reduction catalyst will not also increase.

The first NOx selective catalytic reduction catalyst in the exhaust gas purification system for an internal combustion engine of the present invention may be a catalyst (or a catalytic device) separated from the filter or catalyst of which the temperature is raised by the first temperature rise control, or may be a particulate catalyst which is supported by the filter of which the temperature is raised by the first temperature rise control. Similarly, the second NOx selective catalytic reduction catalyst may be a catalyst separated from the filter or catalyst of which the temperature is raised by the second temperature rise control, or may be a particulate catalyst which is supported by the filter of which the temperature is raised by the second temperature rise control.

Moreover, the predetermined amount in the exhaust gas purification system for an internal combustion engine according to the present invention may be an amount of desorption during temperature rise in which in cases where ammonia source of an amount more than the second basic addition amount is added by the second addition valve, an amount of ammonia desorbing from the first NOx selective catalytic reduction catalyst per unit time due to a temperature rise (hereinafter, referred to as an amount of desorption during a temperature rise) will increase to a maximum and then will become smaller, so that an excessive amount of ammonia will not flow into the third NOx selective catalytic reduction catalyst in unit time.

A maximum value of the amount of desorption during temperature rise which satisfies the above-mentioned conditions can be decided from the amount of ammonia adsorbed in the third NOx selective catalytic reduction catalyst, ammonia source of an amount to be added from the second addition valve (i.e., an amount more than the second basic addition amount), etc. However, even if the predetermined amount is set to a value smaller than the maximum value, there will occur no problem in particular. Then, when an ECU is caused to calculate the maximum value, the load of the ECU becomes large, and hence, as the predetermined amount, it is only necessary to adopt a relatively small fixed value (e.g., "0", 10 % of the maximum value of the amount of desorption during temperature rise, etc.).

Further, when achieving the exhaust gas purification system for an internal combustion engine of the present invention, various things can be adopted as an arrangement for carrying out the addition valve control at the time of execution of the second temperature rise control. For example, the addition valve control at the time of execution of the second temperature rise control may be carried out, by providing to the addition valve control unit a function that in a period of time after the second temperature rise control is started by the temperature rise control and until the amount of ammonia desorbing from the second NOx selective catalytic reduction catalyst per unit time in accordance with the temperature rise due to the second temperature rise control of the filter or catalyst arranged in the second exhaust passage becomes equal to or less than the predetermined amount, the addition valve control unit causes the second addition valve and the first addition valve to add ammonia source of an amount smaller than the second basic addition amount, and ammonia source of an amount equal to the first basic addition amount, respectively, and in a period of time after the amount of ammonia per unit time becomes equal to or less than the predetermined amount and until the temperature of the second NOx selective catalytic reduction catalyst becomes less than a preset temperature at which the reduction of NOx substantially becomes possible by the adsorption of ammonia after the second temperature rise control is terminated, the addition valve control unit causes the second addition valve and the first addition valve to add ammonia source of an amount smaller than the second basic addition amount, and ammonia source of an amount larger than the first basic addition amount, respectively.

The exhaust gas purification system for an internal combustion engine of the present invention may be one in which a determination as to whether the amount of desorption during temperature rise has become equal to or less than the predetermined amount is made based on an amount of desorption during temperature rise which is measured by means of an ammonia sensor, etc. In addition, there is a correlation between the amount of desorption during temperature rise, the temperature of the first NOx selective catalytic reduction catalyst or the amount of ammonia adsorbed in the first NOx selective catalytic reduction catalyst. Accordingly, the exhaust gas purification system for an internal combustion engine of the present invention may be achieved by further providing a determination unit that is configured to determine, based on the temperature of the first NOx selective catalytic reduction catalyst, whether the amount of ammonia per unit time has become equal to or less than the predetermined amount, or a determination unit that is configured to determine, based on the amount of ammonia adsorbed in the first NOx selective catalytic reduction catalyst, whether the amount of ammonia per unit time has become equal to or less than the predetermined amount.

ADVANTAGEOUS EFFECTS OF INVENTION

According to the present invention, it is possible to provide an exhaust gas purification system for an internal combustion engine which includes a first exhaust passage and a second exhaust passage connected to a first group of cylinders and a second group of cylinders, respectively, and a third exhaust passage connected to a downstream side merging portion of the first exhaust passage and the second exhaust passage, with first through third NOx selective catalytic reduction catalysts being arranged in the first through third exhaust passages, respectively, wherein in cases where the temperature of the first NOx selective catalytic reduction catalyst is made to rise, it is possible to suppress an excessive amount of ammonia from flowing into the third NOx selective catalytic reduction catalyst.

BRIEF DESCRIPTION OF DRAWINGS

Fig. 1 is a schematic construction view of an exhaust gas purification system for an internal combustion engine according to a first embodiment of the present invention.
Fig. 2 is a flow chart of temperature rise control management processing which an ECU of the exhaust gas purification system for an internal combustion engine according to the first embodiment carries out in a periodic manner.
Fig. 3 is a flow chart of addition valve control processing which the ECU of the exhaust gas purification system for an internal combustion engine according to the first embodiment carries out in a periodic manner.
Fig. 4 is a view for explaining a function of the exhaust gas purification system for an internal combustion engine according to the first embodiment.
Fig. 5 is an explanatory view of the NOx reduction rate of an SCR catalyst in the exhaust gas purification system for an internal combustion engine according to the first embodiment, and the NOx reduction rate of the SCR catalyst in the case of carrying out temperature rise control with respect to individual SCR filters at the same time.
Figs. 6A through 6D are time charts for explaining the function of the exhaust gas purification system for an internal combustion engine according to the first embodiment.
Fig. 7 is a flow chart of addition valve control processing which an ECU of an exhaust gas purification system for an internal combustion engine according to a second embodiment of the present invention carries out in a periodic manner.

DESCRIPTION OF EMBODIMENTS

Hereinafter, modes for carrying out the present invention will be described in detail based on preferred embodiments thereof. Here, note that arrangements, processing procedures and so on to be described below are not intended to limit the scope of the present invention to these alone as long as there are no specific statements.

< First Embodiment >

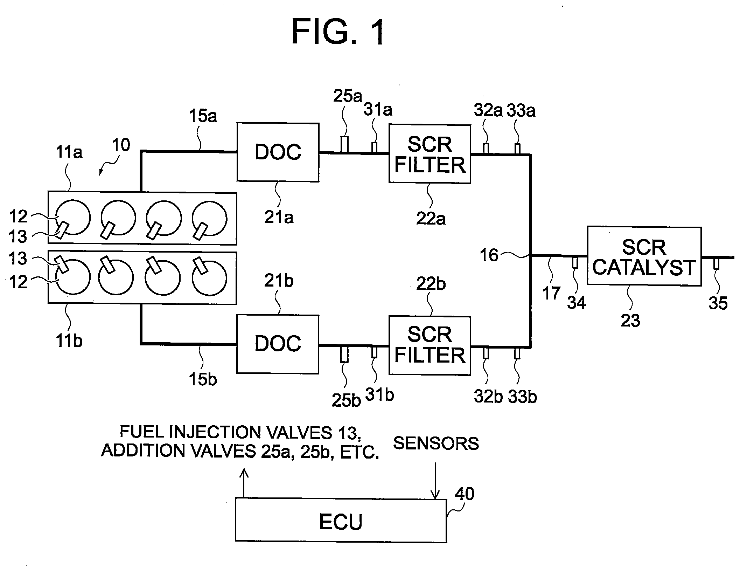

Fig. 1 is a view showing the schematic construction of an exhaust gas purification system for an internal combustion engine 10 according to a first embodiment of the present invention.

The internal combustion engine 10 is a diesel engine having a first bank 11a and a second bank 11b of cylinders for driving a vehicle. Each bank 11 (11a, 11b) of the internal combustion engine 10 is provided with four cylinders 12, and a fuel injection valve 13 for injecting fuel into a corresponding cylinder 12 is arranged in each of the cylinders 12 of each bank 11.

A first exhaust passage 15a is connected to the first bank 11a through an exhaust manifold (illustration omitted) . In addition, a second exhaust passage 15b is connected to the second bank 11b through an exhaust manifold (illustration omitted) . The first exhaust passage 15a and the second exhaust passage 15b are merged with each other at the downstream side thereof, and a third exhaust passage 17 is connected to a merging portion 16 of the first and second exhaust passages 15a, 15b.

In the third exhaust passage 17, there is arranged an SCR (Selective Catalytic Reduction) catalyst 23, which is an NOx selective catalytic reduction catalyst selectively to reduce NOx (nitrogen oxides) in exhaust gas by using ammonia ($NH_3$) as a reducing agent. A temperature sensor 34 for detecting the temperature of the exhaust gas flowing into the SCR catalyst 23 and a PM sensor 35 for detecting the amount of PM (Particulate Matter) in the exhaust gas are arranged in those portions of the third exhaust passage 17 which are located at the upstream side and at the downstream side of the SCR catalyst 23, respectively.

A first DOC (Diesel Oxidation Catalyst) 21a and a first SCR (Selective Catalytic Reduction) filter 22a are arranged in the first exhaust passage 15a in this order from the upstream side thereof. In addition, a second DOC 21b and a second SCR filter 22b are arranged in the second exhaust passage 15b in this order from the upstream side thereof.

The first SCR filter 22a is a device which is constructed such that an SCR catalyst for reducing the NOx in the exhaust gas by using ammonia as a reducing agent is supported by a filter which serves to trap the PM in the exhaust gas. The first DOC 21a is a device which serves to oxidize unburned hydrocarbon, carbon monoxide, NO (nitrogen monoxide) and so on in the exhaust gas. Here, note that in this exhaust gas purification system, in cases where the amount of PM deposition in the first SCR filter 22a increases, fuel is supplied to this first DOC 21a by the control of the fuel injection valves 13 at the side of the first bank 11a. Then, the temperature of the exhaust gas is raised by the heat of combustion of the supplied fuel in the first DOC 21a, so that the temperature of the first SCR filter 22a is caused to go up to a regeneration temperature (e.g., 650 degrees C) at which the PM deposited in the first SCR filter 22a can be oxidized and removed.

The second DOC 21b and the second SCR filter 22b are the same devices as the first DOC 21a and the first SCR filter 22a, respectively.

A first addition valve 25a and a temperature sensor 31a are arranged in a portion of the first exhaust passage 15a between the first DOC 21a and the first SCR filter 22a. Moreover, a temperature sensor 32a and an NOx sensor 33a are arranged in a portion of the first exhaust passage 15a at the downstream side of the first SCR filter 22a. Similarly, a second addition valve 25b and a temperature sensor 31b are arranged in a portion of the second exhaust passage 15b between the second DOC 21b and the second SCR filter 22b, and a temperature sensor 32b and an NOx sensor 33b are arranged in a portion of the second exhaust passage 15b at the downstream side of the second SCR filter 22b.

The temperature sensor 31a arranged in the first exhaust passage 15a is a sensor which detects the temperature of the exhaust gas flowing into the first SCR filter 22a. The temperature sensor 32a and the NOx sensor 33a arranged in the first exhaust passage 15a are a sensor which detects the temperature of the exhaust gas flowing out from the first SCR filter 22a, and a sensor which detects the concentration of NOx in the exhaust gas, respectively. Similarly, the temperature sensor 31b, the temperature sensor 32b and the NOx sensor 33b arranged in the second exhaust passage 15b are a sensor which detects the temperature of the exhaust gas flowing into the second SCR filter 22b, a sensor which detects the temperature of the exhaust gas flowing out from the second SCR filter 22b, and a sensor which detects the concentration of NOx in the exhaust gas flowing out from the second SCR filter 22b, respectively.

The first addition valve 25a is an injector which serves to add (or supply) urea water as an ammonia source into the exhaust gas flowing into the first SCR filter 22a. The second addition valve 25b is an injector which serves to add urea water as an ammonia source into the exhaust gas flowing into the second SCR filter 22b.

In addition, the exhaust gas purification system according to this embodiment is provided with an ECU (Electronic Control unit) 40 which is composed of a CPU (Central Processing Unit), a ROM (Read Only Memory), a RAM (Random Access Memory), and so on. In addition to signals from the above-mentioned various kinds of sensors, signals from an ignition switch, an accelerator opening sensor for detecting an amount of depression of an accelerator pedal, a crank position sensor for detecting an engine rotation speed, an air flow meter for detecting an amount of intake air, and so on are inputted to this ECU 40. Programs (firmware) to be executed by the CPU are stored in the ROM of the ECU 40, and the ECU 40 operates as a unit which serves to control, based on the signals from the various kinds of sensors, the fuel injection valves 13, the addition valves 25a, 25b and so on in an integrated manner, by executing the programs by means of the CPU.

Hereinafter, the function of the exhaust gas purification system according to this embodiment will be explained by focusing on control content according to the ECU 40.

The ECU 40 is configured (programmed) so as to carry out PM deposition amount update processing, ammonia adsorption amount update processing, temperature rise control management processing, addition valve control processing, etc., while carrying out control processing with respect to the internal combustion engine 10. Hereinafter, the contents of the PM deposition amount update processing, the ammonia adsorption amount update processing, the temperature rise control management processing, and the addition valve control processing will be explained in this order.

[PM Deposition Amount Update Processing]

The PM deposition amount update processing is processing which is carried out in a periodic manner by the ECU 40, in order to update an amount of PM deposited in the first SCR filter 22a (hereinafter referred to as a first amount of PM deposition) which is held (stored) in the ECU 40, and an amount of PM deposited in the second SCR filter 22b (hereinafter referred to as a second amount of PM deposition).

At the time of carrying out the PM deposition amount update processing, the ECU 40 first calculates a first amount of PM discharge which is an amount of PM discharged from the first bank 11a of cylinders, and a second amount of PM discharge which is an amount of PM discharged from the second bank 11b, based on the operating state of the internal combustion engine 10 (e. g. , an amount of exhaust gas and an amount of fuel injection). Each of the first and second amounts of PM discharge calculated by the ECU 40 may be an amount of PM discharged from each bank 11 (11a, 11b) in unit time, or may be an amount of PM discharged within one execution period of the PM deposition amount update processing (hereinafter, referred to as t0).

After that, the ECU 40 carries out processing to update the first amount of PM deposition held in the ECU 40 to an amount of PM deposition at that point in time, based on the first amount of PM discharge calculated, the temperature of the first SCR filter 22a, and an amount of exhaust gas per unit time from the first bank 11a (this may be an amount of exhaust gas per period of time t0). More specifically, the ECU 40 calculates the amount of exhaust gas per unit time from the first bank 11a from the amount of intake air and the operating state of the internal combustion engine 10 (an amount of fuel injected from each of the fuel injection valves 13 at the side of the first bank 11a, etc.) . Then, the ECU 40 obtains an amount of PM deposition which has been increased or decreased in a period of time after the last PM deposition amount update processing and before the current PM deposition amount update processing (in other words, during the period of time t0), based on the calculated amount of exhaust gas, the first amount of PM discharge, and the temperature of the first SCR filter 22a (e.g., the temperature itself measured by the temperature sensor 31a, or a temperature estimated from this temperature) . Here, note that the amount of PM deposition in the first SCR filter 22a decreases in the case where the first temperature rise control to be described later is started.

Then, the ECU 40 updates the first amount of PM deposition to the amount of PM deposition at that point in time (i.e., at the point in time of the execution of the PM deposition amount update processing), by increasing or decreasing the first amount of PM deposition by the amount of PM deposition thus obtained.

At the time of the PM deposition amount update processing, according to the same procedure as the above-mentioned update procedure of the first amount of PM discharge, the ECU 40 also carries out processing to update the second amount of PM deposition to the amount of PM deposition at that point in time, based on the second amount of PM discharge, the temperature of the second SCR filter 22b, and the amount of exhaust gas discharged from the second bank 11b.

Then, the ECU 40 terminates the current PM deposition amount update processing, after having updated the first and second amounts of PM deposition.

[Ammonia Adsorption Amount Update Processing]

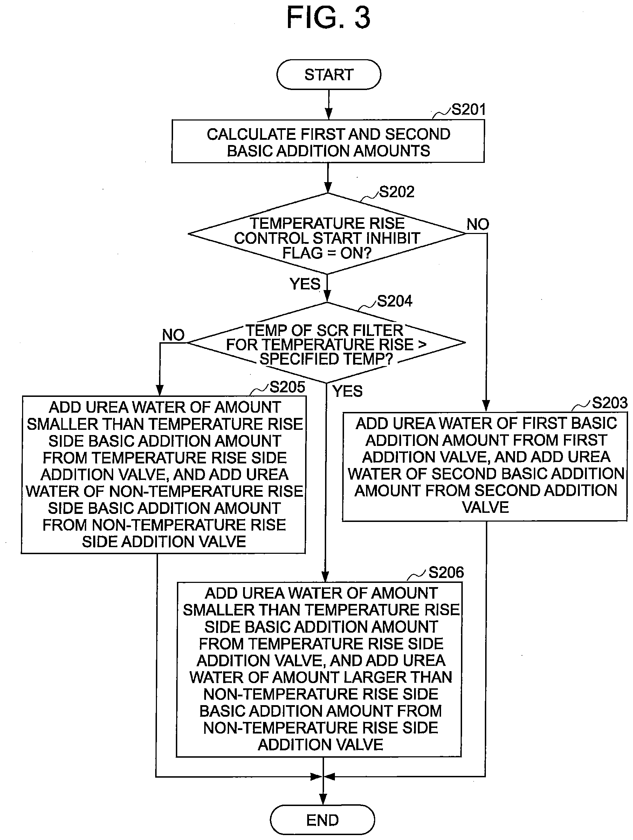

The ammonia adsorption amount update processing is processing which the ECU 40 carries out each time a period of time t1 elapses. Here, note that this execution period t1 of the ammonia adsorption amount update processing is generally set to be the same period of time as an execution period t2 of the addition valve control processing (Fig. 3), or a period of time of 1/n (n is an integer equal to or larger than 2) of t2.

In the ammonia adsorption amount update processing, the amounts of ammonia adsorption for the first SCR filter 22a, the second SCR filter 22b and the SCR catalyst 23, which are held in the ECU 40, are updated by amounts of ammonia adsorption at the point in time of execution of the ammonia adsorption amount update processing, respectively.

More specifically, at the time of the ammonia adsorption amount update processing, first update processing to update the amount of adsorbed ammonia in the first SCR filter 22a, second update processing to update the amount of adsorbed ammonia in the second SCR filter 22b, and third update processing to update the amount of adsorbed ammonia in the SCR catalyst 23 are carried out.

In the first update processing, the amount of adsorbed ammonia in the first SCR filter 22a is updated according to the following expression.

$$
\begin{aligned}
\text{Amount of adsorbed ammonia (after update)} &= \text{amount of} \\
\text{adsorbed ammonia (before update)} &- \text{amount of consumed ammonia} \\
- \text{amount of desorbed ammonia} &+ \text{amount of supplied ammonia} \quad \ldots \\
\text{(expression 1)}
\end{aligned}
$$

Here, the amount of adsorbed ammonia (after update) is the amount of ammonia in the first SCR filter 22a after update by the ammonia adsorption amount update processing (the first update processing). The amount of adsorbed ammonia (before update) is an amount of ammonia in the first SCR filter 22a before update by the ammonia adsorption amount update processing.

The amount of consumed ammonia is an amount of adsorbed ammonia in the first SCR filter 22a consumed by its reaction with NOx during the period of time t1 (hereinafter, referred to as a noted period of time) from the last ammonia adsorption amount update processing to the current ammonia adsorption amount update processing. The amount of desorbed ammonia and the amount of supplied ammonia are an amount of ammonia desorbed from the first SCR filter 22a in the noted period of time, and an amount of ammonia adsorbed to the first SCR filter 22a in the noted period of time, respectively.

At the time of the first update processing, the ECU 40 obtains the amount of consumed ammonia, the amount of desorbed ammonia and the amount of supplied ammonia used for the update of the amount of adsorbed ammonia, according to the following procedures, respectively.

The ECU 40 obtains the amount of consumed ammonia from an NOx reduction rate of the first SCR filter 22a, an amount of exhaust gas flowing into the first SCR filter 22a per unit time (hereinafter, referred to as an amount of incoming exhaust gas), and an amount of NOx flowing into the first SCR filter 22a per unit time (hereinafter referred to as an amount of incoming NOx).

The NOx reduction rate of the first SCR filter 22a is a ratio of an amount of NOx reduced by the first SCR filter 22a with respect to an amount of NOx in the exhaust gas flowing into the first SCR filter 22a.

In the ECU 40, there has been set a first map which stores the NOx reduction rate of the first SCR filter 22a in correlation with the combination of the amount of adsorbed ammonia in the first SCR filter 22a, the temperature thereof and the amount of the incoming exhaust gas flowing thereinto. Here, note that the first map and each map to be explained below, which are referred to by the ECU 40, have been created by experiments. However, eachmapmaybe createdbasedon theoretical calculation results. In addition, each processing using the maps to be explained below may be changed to processing which does not use the maps, i.e., processing in which target values are obtained by using functional expressions obtained from experimental results or theoretical calculation results.

At the time of calculating the amount of consumed ammonia in the first SCR filter 22a, the ECU 40 obtains the temperature measured by the temperature sensor 32a as the temperature of the first SCR filter 22a. Here, note that as the temperature of the first SCR filter 22a, there may be used the temperature measured by the temperature sensor 31a, or a temperature which is estimated from the temperature measured by the temperature sensor 31a or the temperature sensor 32a.

In addition, the ECU 40 calculates the amount of exhaust gas flowing into the first SCR filter 22a, from the amount of intake air and the operating state of the first bank 11a (an amount of fuel injected from each of the fuel injection valves 13 thereof, etc.). Then, the ECU 40 obtains the current NOx reduction rate of the first SCR filter 22a by reading out, from the first map, the NOx reduction rate correlated with the obtained temperature, the calculated amount of the incoming exhaust gas, and the amount of adsorbed ammonia in the first SCR filter 22a before update.

Moreover, the ECU 40 obtains the amount of incoming NOx flowing into the first SCR filter 22a, from the amount of intake air and the operating state of the first bank 11a.

Then, the ECU 40 reads out, from a second map, the value of the amount of consumed ammonia correlated with the NOx reduction rate, the amount of incoming exhaust gas and the amount of incoming NOx, which were obtained as mentioned above. Here, the second map is a map which has been set in the ECU 40, and which stores the amount of consumed ammonia per unit time in correlation with the combination of the NOx reduction rate, the amount of incoming exhaust gas, and the amount of incoming NOx. Then, the ECU 40 calculates the amount of consumed ammonia in the first SCR filter 22a in the noted period of time by using the read-out value (i.e., the amount of consumed ammonia per unit time).

In the ECU 40, there has also been set a third map which stores the amount of ammonia desorbed from the first SCR filter 22a per unit time, in correlation with the combination of the amount of adsorbed ammonia in the first SCR filter 22a before update, the temperature of the first SCR filter 22a. The ECU 40 reads out, from this third map, the amount of ammonia desorbed from the first SCR filter 22a per unit time, which is correlated with the combination of the amount of adsorbed ammonia in the first SCR filter 22a before update, and the temperature of the first SCR filter 22a, and then, the ECU 40 calculates the amount of desorbed ammonia from the first SCR filter 22a in the noted period of time, from the amount of desorbed ammonia per unit time thus read out and t1.

Further, in the ECU 40, there has also been set a fourth map which stores the amount of supplied ammonia in the first SCR filter 22a in correlation with the combination of the amount of adsorbed ammonia in the first SCR filter 22a before update, the temperature of the first SCR filter 22a, and the amount of ammonia flowing into the first SCR filter 22a in the noted period of time (i.e., the period of time t1) (hereinafter, referred to as an amount of incoming ammonia). Here, note that, as already explained, the amount of supplied ammonia is not an amount of ammonia supplied to the first SCR filter 22a in the noted period of time, but an amount of ammonia adsorbed to the first SCR filter 22a in the noted period of time.

In order to obtain the amount of incoming ammonia necessary for the decision of the amount of supplied ammonia read out from the fourth map, the ECU 40 calculates the amount of ammonia flowing into the first SCR filter 22a within the noted period of time from the amount of urea water most recently added from the first addition valve 25a. Then, the ECU 40 calculates the amount of supplied ammonia in the first SCR filter 22a in the noted period of time, by reading out, from this fourth map, a value which is correlated with the combination of the amount of ammonia thus calculated, the amount of adsorbed ammonia in the first SCR filter 22a before update, and the temperature of the first SCR filter 22a.

The ECU 40, which has obtained the amount of consumed ammonia, the amount of desorbed ammonia and the amount of supplied ammonia, in the first SCR filter 22a in the noted period of time in the procedures as mentioned above, updates the amount of adsorbed ammonia according to the above-mentioned expression 1, by using the amounts thus obtained. Then, the ECU 40 terminates the first update processing.

The second update processing to update the amount of adsorbed ammonia in the second SCR filter 22b is processing in which the same processing as the first update processing of the above-mentioned contents is carried out with respect to the second SCR filter 22b. For that reason, though a detailed explanation of the second update processing is omitted, the second SCR filter 22b in the exhaust gas purification system according to this embodiment is the same as the first SCR filter 22a. Accordingly, the second update processing is processing in which the amount of adsorbed ammonia in the second SCR filter 22b is updated by using the first through fourth maps referenced at the time of the first update processing as they are.

The third update processing is also processing in which the amount of adsorbed ammonia in the SCR filter 23 is updated according to the same procedures as those in the first update processing (and the second update processing). For that reason, in the following, the contents of the third update processing will be explained for points different from the first update processing.

Although the first SCR filter 22a and the second SCR filter 22b are the same with each other, the SCR catalyst 23 is different from the first SCR filter 22a. For that reason, at the time of the third update processing, there are used first through fourth maps prepared for the third update processing. In addition, the exhaust gas having passed through the first SCR filter 22a, and the exhaust gas having passed through the second SCR filter 22b flow into the SCR catalyst 23. For that reason, the amount of incoming exhaust gas and the amount of incoming NOx are calculated based on the concentration of NOx detected by the NOx sensor 33a at the time of the third update processing, the concentration of NOx detected by the NOx sensor 33b, and the amount of exhaust gas flowing out from the first SCR filter 22a per unit time and the amount of exhaust gas flowing out from the second SCR filter 22b per unit time.

[Temperature Rise Control Management Processing]

The temperature rise control management processing is processing which the ECU 40 carries out in a periodic manner for management of the first temperature rise control for carrying out the temperature rise of the first SCR filter 22a, and of the second temperature rise control for carrying out the temperature rise of the second SCR filter 22b (i.e., for a determination as to whether each of the first and second temperature rise controls is to be started, etc.).

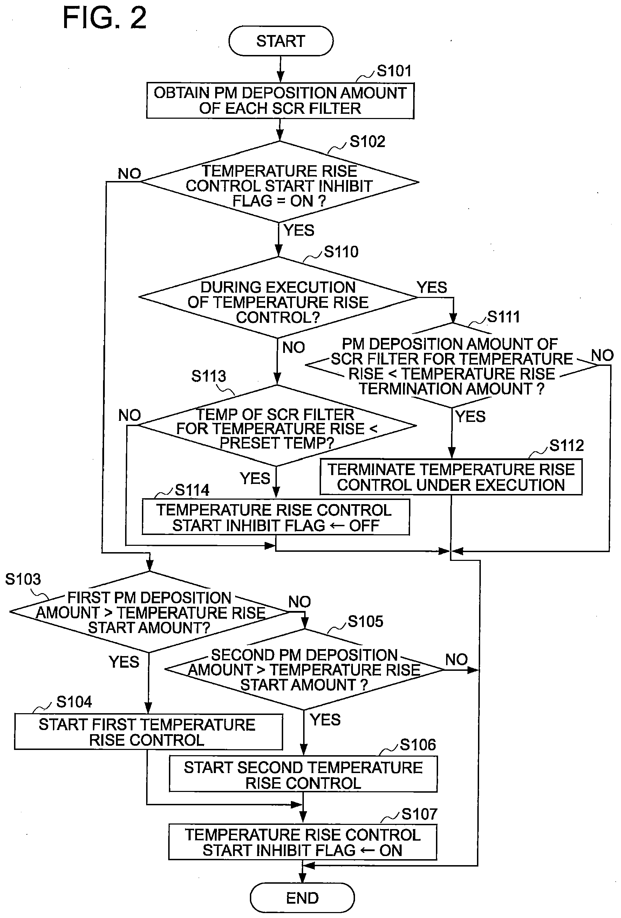

Hereinafter, the temperature rise control management processing will be explained by using Fig. 2 which is a flow chart of the temperature rise control management processing. Here, note that the execution period of this temperature rise control management processing is not limited in particular, but is generally set to be the same period as the execution period t2 of the addition valve control processing (Fig. 3 to be described later in detail), or a period not larger than t2.

As shown in Fig. 2, after starting the temperature rise control management processing, the ECU 40 first obtains the amount of PM deposition in each of the first SCR filter 22a and the second SCR filter 22b (step S101). That is, the ECU 40 obtains the first amount of PM deposition and the second amount of PM deposition which have been updated by the PM deposition amount update processing, and which have been held in the ECU 40.

Then, the ECU 40 determines whether a temperature rise control start inhibit flag is set to on (step S102).

Before explaining the details of the temperature rise control start inhibit flag, reference will be made to the first temperature rise control and the second temperature rise control which are carried out by the ECU 40.

The first temperature rise control carried out by the ECU 40 is control in which the temperature of the first SCR filter 22a is raised to a regeneration temperature (e.g., 650 degrees C) at which the oxidation removal of PM can be carried out, by causing each of the fuel injection valves 13 at the side of the first bank 11a to perform post injection in which fuel is injected at the timing at which the injected fuel is not burned in each cylinder 12 but discharged into the first exhaust passage 15a in an unburnt state. Similarly, the second temperature rise control carried out by the ECU 40 is control in which the temperature of the second SCR filter 22b is raised to the regeneration temperature, by causing each of the fuel injection valves 13 at the side of the second bank 11b to perform post injection. However, the first and second temperature rise controls may be other controls (e.g., control in which fuel is injected from a fuel addition valve arranged in the exhaust manifold, etc.).

The temperature rise control start inhibit flag is a flag which means that the first temperature rise control and the second temperature rise control of such contents may not be carried out at the same period, wherein in cases where the value of the flag is on, it is a flag meaning that the start of the temperature rise control is inhibited. However, the temperature rise control start inhibit flag is not a flag only used for inhibiting one of the first and second temperature rise controls from being started during the execution of the other temperature rise control, but is a flag not only for inhibiting the starting of the one temperature rise control during the execution of the other temperature rise control, but also for inhibiting the starting of the one temperature rise control until the temperature of the first SCR filter 22a or the second SCR filter 22b, which has been raised by the other temperature rise control, falls to a preset temperature, after the termination of the other temperature rise control.

Here, the preset temperature is a temperature which has been set in advance as a temperature equal to or less than the temperature of the SCR filter 22, at which the reduction of NOx substantially becomes possible by the adsorption of ammonia . More specifically, the preset temperature is a temperature which has been set in advance as a temperature of the SCR filter 22 at which the SCR filter 22 can be used as a catalytic device which can remove or reduce NOx to a certain extent. Here, note that the use of the preset temperature as mentioned above during the temperature rise control management processing for management of the first temperature rise control and the second temperature rise control (i.e., for a determination as to whether each of the first and second temperature rise controls is to be started, etc.) is because the temperature rise control start inhibit flag is a flag referred to by the addition valve control processing (Fig. 3 to be described later in detail).

In cases where the temperature rise control start inhibit flag is not on (step S102; NO), the ECU 40 determines whether the first amount of PM deposition obtained in step S101 becomes larger than a temperature rise start amount which is a value set in advance as an amount of PM deposition at which the temperature rise control should be started (step S103).

In cases where the first amount of PM deposition is equal to or less than the temperature rise start amount (step S103; NO), the ECU 40 determines whether the second amount of PM deposition obtained in step S101 becomes larger than the temperature rise start amount (step S105) . Then, in cases where the second amount of PM deposition is equal to or less than the temperature rise start amount (step S105; NO), the ECU 40 terminates this temperature rise control management processing, without performing any processing in particular.

On the other hand, in cases where the first amount of PM deposition becomes larger than the temperature rise start amount (step S103; YES), the ECU 40 starts the first temperature rise control (step S104) . In addition, in cases where the first amount of PM deposition becomes equal to or less than the temperature rise start amount, but the second amount of PM deposition becomes larger than the temperature rise start amount (step S103; NO, and step 105; YES), the ECU 40 starts the second temperature rise control (step S106).

Subsequently, after terminating the processing of step S104 or S106, the ECU 40 changes the temperature rise control start inhibit flag to on (step S107), and then terminates this temperature rise control management processing.

As is clear from the processing procedures explained thus far, when the first or second amount of PM deposition exceeds the temperature rise start amount as the PM deposits in the first SCR filter 22a and the second SCR filter 22b due to the operation of the internal combustion engine 10, the first or second temperature rise control is started, and the temperature rise control start inhibit flag is changed to on.

When the temperature rise control start inhibit flag is changed to on, the ECU 40 branches the control flow or routine to the side of "YES" in step S102. That is, when the temperature rise control start inhibit flag is changed to on, the ECU 40 stops the processings of steps S103 through S107. Then, each of the first and second temperature rise controls is the processing which is started during the processings of steps S103 through S107, and hence, the first temperature rise control and the second temperature rise control will be controlled so as to be carried out at times different from each other by means of the temperature rise control start inhibit flag.

In cases where the temperature rise control start inhibit flag is on (step S102; YES), the ECU 40 determines whether the first or second temperature rise control is in the course of execution (step S110).

In cases where the first or second temperature rise control is in the course of execution (step S110; YES), the ECU 40 determines whether the amount of PM deposition in the SCR filter 22 for temperature rise is less than a temperature rise termination amount (step S111). Here, in cases where the temperature rise control being in the course of execution is the first temperature rise control, the SCR filter 22 for temperature rise is the first SCR filter 22a, whereas in cases where the temperature rise control being in the course of execution is the second temperature rise control, the SCR filter 22 for temperature rise is the second SCR filter 22b. Accordingly, in cases where the SCR filter 22 for temperature rise is the first SCR filter 22a, the amount of PM deposition in the SCR filter 22 for temperature rise is the first amount of PM deposition, whereas in cases where the SCR filter 22 for temperature rise is the second SCR filter 22b, the amount of PM deposition in the SCR filter 22 for temperature rise is the second amount of PM deposition. In addition, the temperature rise termination amount is a value set in advance as an amount of PM deposition at which the temperature rise control is terminated.

In cases where the amount of PM deposition in the SCR filter 22 for temperature rise is less than the temperature rise termination amount (step S111; YES), the ECU 40 terminates the temperature rise control management processing (the processing of Fig. 2), after terminating the first or second temperature rise control in the course of execution (step S112) . On the other hand, in cases where the amount of PM deposition in the SCR filter 22 for temperature rise is not less than the temperature rise termination amount (step S111; NO), the ECU 40 terminates the temperature rise control management processing, without terminating the first or second temperature rise control in the course of execution.

In cases where the temperature rise control start inhibit flag is set to on, but the first or second temperature rise control is not in the course of execution (step S102; YES, and step S110; NO), the ECU 40 determines whether the temperature of the SCR filter 22 for temperature rise is less than the preset temperature (step S113). That is, in cases where the first or second temperature rise control is terminated, the ECU 40 determines in step S113 whether the temperature of the SCR filter 22 for temperature rise being raised until then has become less than the preset temperature.

In cases where the temperature of the SCR filter 22 for temperature rise is equal to or higher than the preset temperature (step S113; NO), the ECU 40 terminates the temperature rise control management processing, without performing any processing in particular. On the other hand, in cases where the temperature of the SCR filter 22 for temperature rise is less than the preset temperature (step S113; YES), the ECU 40 changes the value of the temperature rise control start inhibit flag to off (step S114), and then terminates the temperature rise control management processing.

When the value of the temperature rise control start inhibit flag is changed to off, the processings of steps S103 through S107 become possible. Accordingly, for example, in cases where the value of the temperature rise control start inhibit flag is changed to off in a state where the amount of PM deposition in one of the SCR filters 22, the temperature of which has not been raised, exceeds the temperature rise start amount, the temperature rise control on the one SCR filter 22 will subsequently be started.

[Addition Valve Control Processing]

A flow chart of the addition valve control processing is shown in Fig. 3.

This addition valve control processing is processing which the ECU 40 carries out each time a period of time t2 elapses . Here, note that, as already explained, the execution period t2 of the addition valve control processing is generally set to be the same period of time as the period of time t1 which is the execution period of the ammonia adsorption amount update processing, or an integral multiple of the period of time t1. In addition, in the following, for convenience of explanation, each of the first SCR filter 22a, the second SCR filter 22b, and the SCR catalyst 23 will also be referred to as an NOx reduction unit.

As shown in Fig. 3, after starting the addition valve control processing, the ECU 40 first calculates a first basic addition amount and a second basic addition amount (step S201) .

The first basic addition amount and the second basic addition amount are amounts which are calculated as basic amounts of the urea water to be added by the first addition valve 25a and the second addition valve 25b, respectively. Here, note that, as illustrated, after terminating the processing of step S201, the ECU 40 causes the first addition valve 25a and the second addition valve 25b to add the first basic addition amount and the second basic addition amount, respectively (step S203), in cases where the value of the temperature rise control start inhibit flag updated in the temperature rise control management processing is off (step S202; NO). Accordingly, the basic amounts of the urea water to be added by the first addition valve 25a and the second addition valve 25b are amounts of the urea water in which the ECU 40 causes the individual addition valves 25 to add, in cases where the temperature rise control start inhibit flag is off.

The first basic addition amount and the second basic addition amount calculated in step S201 are amounts of urea water in which when the processing of step S203 is carried out, a total amount of adsorbed ammonia becomes a target total amount, or is close to the target total amount.

Here, the total amount of adsorbed ammonia is a total sum of the amounts of adsorbed ammonia in the individual NOx reduction units (i.e., the first SCR filter 22a, the second SCR filter 22b, and the SCR catalyst 23). The target total amount is a total sum of target amounts of adsorbed ammonia in the individual NOx reduction units.

The target amount of adsorbed ammonia is an amount which has been set in advance as an amount of adsorbed ammonia which is preferable to exist in order to carry out the reduction of NOx in a proper or satisfactory manner. To change the target amount of adsorbed ammonia with the temperature of the NOx reduction unit can control the amount of adsorbed ammonia in each the NOx reduction unit in a proper or satisfactory manner. For that reason, in the ECU 40, there has been set a target adsorbed ammonia amount map for the SCR catalyst 23 in which target amounts of adsorbed ammonia in the SCR catalyst 23 are stored in correlation with the temperature of the SCR catalyst 23. In addition, in the ECU 40, there have also been set target adsorbed ammonia amount maps for the first SCR filter 22a and for the second SCR filter 22b, respectively.

The first basic addition amount and the second basic addition amount in which the total amount of adsorbed ammonia will become the target total amount or will come close to the target total amount when the processing of step S203 is carried out can be calculated based on the amount of adsorbed ammonia, the temperature and the target amount of adsorbed ammonia in each of the NOx reduction units, and the amount of exhaust gas and the amount of NOx flowing into each of the SCR filters 22 in unit time (or in the period of time t2).

For that reason, the ECU 40 reads out the target amount of adsorbed ammonia correlated with the temperature of each of the NOx reduction unit, from the target adsorbed ammonia amount map for each of the NOx reduction units, at the time of processing of step S201. In addition, the ECU 40 obtains the amount of adsorbed ammonia in each of the NOx reduction units which is calculated by the above-mentioned ammonia adsorption amount update processing and which is held in the ECU 40. Moreover, the ECU 40 calculates the amount of NOx flowing into each of the SCR filters 22 in unit time, from the amount of intake air and the operating state of the internal combustion engine 10.

In addition, the ECU 40 calculates the first basic addition amount and the second basic addition amount based on the information prepared in the above manner, in such a manner that the total amount of adsorbed ammonia becomes the target total amount or comes close to the target total amount.

A variety of methods can be adopted as a calculation procedure for the first and second basic addition amounts . For example, the first and second basic addition amounts may have been calculated by the following calculation procedures.

(A1) As the first basic addition amount, there is calculated urea water of an amount in which an amount of ammonia produced by the hydrolysis of the amount of urea water becomes equal to an amount of ammonia which is consumed by its reaction with NOx flowing into the first SCR filter 22a within the period of time t0, in the first SCR filter 22a and the SCR catalyst 23.

(A2) As the second basic addition amount, there is calculated urea water of an amount in which an amount of ammonia produced by the hydrolysis of the amount of urea water becomes equal to an amount of ammonia which is consumed by its reaction with NOx flowing into the second SCR filter 22b within the period of time t0, in the second SCR filter 22b and the SCR catalyst 23.

(A3) The first basic addition amount and the second basic addition amount as the result of the processing of step S201 are calculated by correcting the first and second basic addition amounts thus calculated for bringing the total amount of adsorbed ammonia close to the target total amount.

The processing of (A3) may be processing which is carried out by using a map in which obtained in an amount of correction for each of the basic addition amounts calculated by the processings of (A1) and (A2), from the target total amount, the amount of adsorbed ammonia in each of the NOx reduction units, the temperatures thereof, etc. However, such a map can not but become one of a large capacity or data. For that reason, the processing of (A3) may be processing in which the first and second basic addition amounts are corrected (increased or decreased) by "the target total amount - the total amount of adsorbed ammonia" x $\beta/2$ (here, $\beta$ is a plus value smaller than 1) .

In addition, the first and second basic addition amounts may be calculated with which the total amount of adsorbed ammonia substantially matches the target total amount, by repeating processing of the same contents as the above-mentioned ammonia adsorption amount update processing, while changing the value of the amount of addition of urea water from each of the addition valves 25a, 25b.

Here, note that the processing carried out by the ECU 40 in step S201 is processing which calculates the first and second basic addition amounts on the assumption that the ammonia produced by the hydrolysis of the urea water is not oxidized, even if the temperature of the first SCR filter 22a or the second SCR filter 22b is high. That is, in cases where the temperature of the first SCR filter 22a is about 650 degrees C, for example, the ammonia produced from the urea water added from the first addition valve 25a will be oxidized to NOx in the first SCR filter 22a. Accordingly, ammonia is not supplied to the SCR catalyst 23 from the side of the first exhaust passage 15a, but in the processing of step S201, in such a case, too, the first and second basic addition amounts are calculated in which the total amount of adsorbed ammonia becomes the target total amount or comes close to the target total amount, assuming that ammonia is supplied to the SCR catalyst 23 from the side of the first exhaust passage 15a.

After terminating the processing of step S201, the ECU 40 determines whether the temperature rise control start inhibit flag is set to on. As already explained, in cases where the value of the temperature rise control start inhibit flag is not on (step S202; NO), the ECU 40 causes the first addition valve 25a and the second addition valve 25b to add urea water of the first basic addition amount and urea water of the second basic addition amount, respectively (step S203). Then, the ECU 40 terminates the current addition valve control processing (i.e., the processing of Fig. 3).

On the other hand, in cases where the temperature rise control start inhibit flag is set to on (step S202; YES), the ECU 40 determines whether the temperature of the SCR filter 22 for temperature rise exceeds a specified temperature (step S204).

The determination in this step is made in order to determine whether the amount of ammonia desorbing per unit time from the SCR filter 22 for temperature rise due to the temperature thereof being caused to rise has become equal to or less than a predetermined amount. The predetermined amount is an amount ("0" in this embodiment) which has been set in advance to an amount with which an excessive amount of ammonia will not flow into the SCR catalyst 23 in unit time, in cases where the amount of addition of the urea water from an addition valve 25 (i.e., 25a or 25b) for an SCR filter not targeted for temperature rise (an addition valve at a non-temperature rise side) is made larger than a basic addition amount (i.e., the first addition valve 25a or the second addition valve 25b). Then, the amount of ammonia desorbing per unit time from the SCR filter 22 for temperature rise first goes up to a certain value, and then decreases, as the temperature of the SCR filter 22 for temperature rise goes up. Accordingly, as the specified temperature, there is used a relatively high temperature (i. e. , a temperature which can be reached during temperature rise and which is less than the regeneration temperature) at which the amount of ammonia desorbing from the SCR filter 22 for temperature rise per unit time becomes the predetermined amount (i.e., falls to the predetermined amount).

In cases where the temperature of the SCR filter 22 for temperature rise is equal to or less than the specified temperature (step S204; NO), the ECU 40 causes the temperature rise side addition valve 25 (25a or 25b) and the non-temperature rise side addition valve 25 (25b or 25a) to add urea water of an amount smaller than a temperature rise side basic addition amount, and urea water of a non-temperature rise side basic addition amount (step S205). Here, the temperature rise side addition valve 25 and the temperature rise side basic addition amount are the first addition valve 25a and the first basic addition amount, respectively, in the case where the first temperature rise control is carried out, and in the case where the temperature of the first SCR filter 22a has not fallen less than the preset temperature though the first temperature rise control has been terminated, whereas they are the second addition valve 25b and the second basic addition amount, respectively, in the case where the second temperature rise control is carried out, and in the case where the temperature of the second SCR filter 22b has not fallen less than the preset temperature though the second temperature rise control has been terminated. On the other hand, the non-temperature rise side addition valve 25 and the non-temperature rise side basic addition amount are the second addition valve 25b and the second basic addition amount, respectively, in the case where the first temperature rise control is carried out, and in the case where the temperature of the first SCR filter 22a has not fallen less than the preset temperature though the first temperature rise control has been terminated, whereas they are the first addition valve 25a and the first basic addition amount, respectively, in the case where the first temperature rise control is carried out, and in the case where the temperature of the first SCR filter 22a has not fallen less than the preset temperature though the first temperature rise control has been terminated.

On the other hand, in cases where the temperature of the SCR filter 22 for temperature rise exceeds the specified temperature (step S204; YES), the ECU 40 causes the temperature rise side addition valve 25 and the non-temperature rise side addition valve 25 to add urea water of an amount smaller than the temperature rise side basic addition amount, and urea water of an amount larger than the non-temperature rise side basic addition amount (step S206). Then, after terminating the processing of step S205 or S206, the ECU 40 terminates the current addition valve control processing.

Hereinafter, the contents of the addition valve control processing will be explained more specifically.

Let us consider the case where the value of the temperature rise control start inhibit flag is changed to on (step S107 in Fig. 2), by the starting of first regeneration control (step S104 in Fig. 2).

In this case, in step S202 of the addition valve control processing (Fig. 3) which is carried out immediately after the value of the temperature rise control start inhibit flag has been changed to on, branching to the side of "YES" is carried out. Then, in step S204, it is determined whether the temperature of the first SCR filter 22a, which is the SCR filter 22 for temperature rise, exceeds the specified temperature (step S204; NO).

Immediately after the start of the first regeneration control, the temperature of the first SCR filter 22a is equal to or less than the specified temperature. For that reason, the processing of step S205 is carried out, wherein control is performed for causing the first addition valve 25a and the second addition valve 25b to add urea water of an amount smaller than the first basic addition amount, and urea water of an amount equal to the second basic addition amount, respectively.

In cases where the first regeneration control is started and the value of the temperature rise control start inhibit flag is changed to on, thereafter for a certain period of time (i.e. , until the temperature of the first SCR filter 22a exceeds the specified temperature), the processing of step S205 is carried out each time the addition valve control processing is performed.

Then, in cases where the temperature of the first SCR filter 22a exceeds the specified temperature, the processing of step S206 is carried out, wherein control is performed for causing the first addition valve 25a and the second addition valve 25b to add urea water of an amount smaller than the first basic addition amount, and urea water of an amount larger than the second basic addition amount, respectively.

When the amount of PM deposition in the first SCR filter 22a becomes less than the temperature rise termination amount, the processing of step S112 in the temperature rise control management processing (Fig. 2) is carried out, so that the first temperature rise control is terminated, while maintaining the value of the temperature rise control start inhibit flag in an on state. Then, when a certain period of time has elapsed after the first temperature rise control is terminated, the temperature of the first SCR filter 22a, which is the SCR filter for temperature rise, becomes less than the preset temperature, so that the value of the temperature rise control start inhibit flag is changed to off (step S114).

In the addition valve control processing which is carried out immediately after the value of the temperature rise control start inhibit flag has been changed to off, in step S202, branching to the side of "NO" is carried out. For that reason, the processing of step S203 is carried out, so that the amount of addition of urea water by the first addition valve 25a is changed to the first basic addition amount from the amount which is smaller than the first basic addition amount, and at the same time, the amount of addition of urea water by the second addition valve 25b is changed to the second basic addition amount from the amount which is larger than the first basic addition amount.

As explained above, the ECU 40 according to this embodiment performs the first temperature rise control to raise the temperature of the first SCR filter 22a arranged in the first exhaust passage 15a, and the second temperature rise control to raise the temperature of the second SCR filter 22b arranged in the second exhaust passage 15b at different times (i.e., does not perform them at the same time).

Accordingly, according to the temperature rise control method of the ECU 40 (refer to Fig. 2), it is possible to improve the NOx reduction rate of the SCR catalyst 23 more than in the case where the temperature rise control of the first SCR filter 22a and that of the second SCR filter 22b are carried out at the same time.

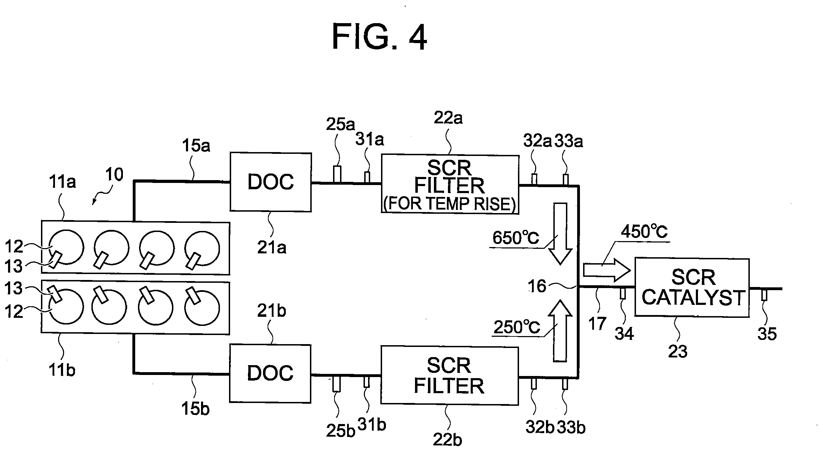

Specifically, let us consider the case where the ECU 40 carries out the first temperature rise control to raise the temperature of the first SCR filter 22a to 650 degrees C. In this case, as schematically shown in Fig. 4, the exhaust gas of a high temperature (650 degrees C) flows into the SCR catalyst 23 from the side of the first exhaust passage 15a. However, the second temperature rise control is not carried out, so that the exhaust gas of a low temperature (250 degrees C in Fig. 4) flows in from the side of the second exhaust passage 15b, as a result of which the temperature of the SCR catalyst 23 in the case of the first temperature rise control being carried out becomes a relatively low temperature (450 degrees C in Fig. 4) .

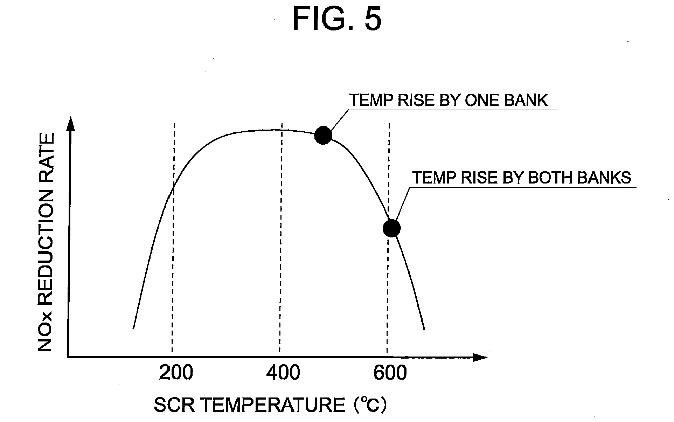

On the other hand, in cases where the first temperature rise control to raise the temperature of the first SCR filter 22a to 650 degrees C and the second temperature rise control to raise the temperature of the second SCR filter 22b to 650 degrees C are carried out at the same time, the temperature of the SCR catalyst 23 becomes somewhat lower than the regeneration temperature, and so it becomes about 600 degrees C. Then, as shown in Fig. 5, the general NOx reduction rate of the SCR catalyst will decrease remarkably, when the temperature of the SCR catalyst becomes equal to or higher than 500 degrees C. For that reason, the NOx reduction rate of the SCR catalyst 23 in the case of carrying out the temperature rise control of the first SCR filter 22a and that of the second SCR filter 22b at the same time becomes low ("temp rise by both banks"), as shown in Fig. 5. On the other hand, when the temperature of the SCR catalyst 23 is about 450 degrees C, the NOx reduction rate of the SCR catalyst 23 ("temp rise by one bank") does not become substantially low.

In this manner, according to the temperature rise control method of the ECU 40, it is possible to improve the NOx reduction rate of the SCR catalyst 23 more than in the case where the temperature rise control of the first SCR filter 22a and that of the second SCR filter 22b are carried out at the same time.

However, even if the first temperature rise control and the second temperature rise control are caused to carry out at different times, in the case where at the time of the start of certain temperature rise control, e. g. , the first temperature rise control, the amount of addition of urea water from the first addition valve 25a is made less than the first basic addition amount, and at the same time, the amount of addition of urea water from the second addition valve 25b is made more than the second basic addition amount (hereinafter referred to as "in the case where the amount of addition of urea water from the second addition valve 25b is increased at the time of the start of the first temperature rise control"), there will be a fear that an excessive amount of ammonia may flow into the SCR catalyst 23 within unit time, and ammonia slip may occur.

On the other hand, as in this embodiment, if urea water of an amount smaller than the first basic addition amount and urea water of an amount equal to the second basic addition amount are added from the first addition valve 25a and the second addition valve 25b, respectively, in a period of time after the start of the first temperature rise control and until the temperature of the first SCR filter 22a is raised by the first temperature rise control and exceeds the specified temperature (step S202; YES, and S204; NO), the amount of ammonia flowing into the SCR catalyst 23 within unit time during the temperature rise of the first SCR filter 22a can be made smaller than in the case where the amount of addition of urea water from the second addition valve 25b is increased at the time of the start of the first temperature rise control.

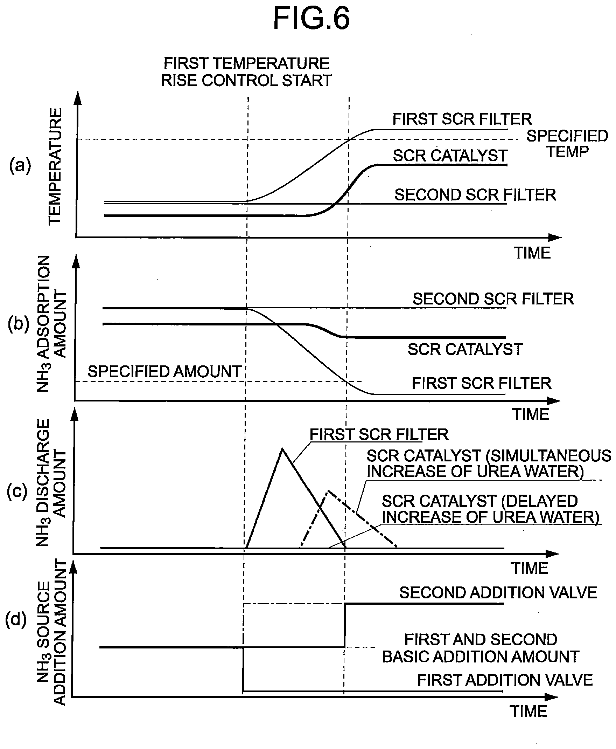

Hereinafter, by using Figs. 6A through 6D, there will be specifically explained the reason why in the case where the amount of addition of urea water from each of the addition valves 25 is controlled as in this embodiment, the amount of ammonia flowing into the SCR catalyst 23 within unit time during the temperature rise of the first SCR filter 22a becomes smaller than in the case where the amount of addition of urea water from the second addition valve 25b is increased at the time of the start of the first temperature rise control.

In the case where the amount of addition of urea water from each of the addition valves 25 is controlled as in this embodiment, too, or in the case where the amount of addition of urea water from the second addition valve 25b is increased at the time of the start of the first temperature rise control, too, the temperature of the first SCR filter 22a begins to go up, when the first temperature rise control is started, as shown in Fig. 6A. Then, the ammonia adsorbed to the first SCR filter 22a desorbs in accordance with the rise in the temperature of the first SCR filter 22a, as shown in Fig. 6C.

In the case where the amount of addition of urea water from the second addition valve 25b is increased at the time of the start of the first temperature rise control (refer to an alternate long and short dash line in Fig. 6D), the ammonia (Fig. 6C) desorbed from the first SCR filter 22a and the ammonia having slipped through the second SCR filter 22b are supplied to the SCR catalyst 23. For that reason, in the case where the amount of addition of urea water from the second addition valve 25b is increased at the time of the start of the first temperature rise control, an excessive amount of ammonia may flow into the SCR catalyst 23 within unit time, so that the ammonia may also flow out from the SCR catalyst 23, as shown by an alternate long and short dash line attached with a caption "SCR CATALYST (SIMULTANEOUS INCREASE OF UREA WATER)" in Fig. 6C.

On the other hand, as in this embodiment, when the amount of addition of urea water from the second addition valve 25b is caused not to be increased, twists (i.e., caused to be the second basic addition amount) until the temperature of the first SCR filter 22a exceeds the specified temperature after the start of the first temperature rise control, the amount of ammonia supplied to the SCR catalyst 23 from the side of the second exhaust passage 15b during a period of time in which ammonia desorbs from the first SCR filter 22a becomes smaller than in the case where the amount of addition of urea water from the second addition valve 25b is increased at the time of the start of the first temperature rise control, as a result of which an excessive amount of ammonia is not supplied to the SCR catalyst 23 within unit time. Accordingly, if the amount of addition of urea water from each of the addition valves 25 is controlled as in this embodiment, it becomes possible to keep ammonia from flowing out from the SCR catalyst 23 at all, and to make the amount of discharge of ammonia from the SCR catalyst 23 to become smaller, as shown by a solid line attached with a caption that reads "SCR CATALYST (DELAYED INCREASE OF UREA WATER) " in Fig. 6C.

Moreover, in the exhaust gas purification system of this embodiment, in a period of time after the start of the first temperature rise control and until the temperature of the first SCR filter 22a is raised by the first temperature rise control and becomes equal to or higher than the specified temperature (hereinafter, referred to as a first period of time), urea water of an amount to be added from the first addition valve 25a and the second addition valve 25b (an amount smaller than the first basic addition amount + the second basic addition amount) generally becomes an amount smaller than an amount (the first basic addition amount + the second basic addition amount) consumed by the removal (reduction) of NOx discharged from the first bank 11a and the second bank 11b of the internal combustion engine 10. However, when the amount of ammonia flowing into the SCR catalyst 23 within unit time is not an excessive amount, the ammonia desorbed from the SCR filter 22a by the execution of the first temperature rise control adsorbs to the SCR catalyst 23. Accordingly, the decrease in the NOx removal (reduction) performance of the SCR catalyst 23 in the first period of time is alleviated by an amount of ammonia which has desorbed from the first SCR filter 22a and which is adsorbed to the SCR catalyst 23. Then, in the exhaust gas purification system, in a period of time after the first period of time is terminated and until the temperature of the first NOx selective catalytic reduction catalyst becomes less than a preset temperature at which the reduction of NOx substantially becomes possible by the adsorption of ammonia after the first temperature rise control is terminated, urea water of an amount more than the second basic addition amount is added from the second addition valve 25b (stepS206) . That is, in the exhaust gas purification system, when the first period of time is terminated, the amount of addition of the urea water from the second addition valve 25b is increased. Accordingly, in the exhaust gas purification system, the amount of adsorbed ammonia in the SCR filter 23 does not decrease to an excessive extent during the execution of the first temperature rise control, and hence, NOx is not discharged from the SCR catalyst 23.

Further, in the exhaust gas purification system of this embodiment, in a period of time after the first temperature rise control is started and until the temperature of the first NOx selective catalytic reduction catalyst becomes less than the preset temperature at which the reduction of NOx by the SCR filter 22 substantially becomes possible by the adsorption of ammonia after the first temperature rise control is terminated, urea water of an amount smaller than the first basic addition amount is added from the first addition valve 25a (steps S205 and S206). Accordingly, in the exhaust gas purification system for an internal combustion engine of the present invention, the urea water will not be added into the first exhaust passage 15a which has become a high temperature, and hence, the amount of NOx flowing into the SCR catalyst 23 will not also increase to an excessive extent.

< Second Embodiment >

An exhaust gas purification system for an internal combustion engine according to a second embodiment of the present invention is a system which is different from the above-mentioned exhaust gas purification system for an internal combustion engine according to the first embodiment only in the contents of the addition valve control processing to be executed. For that reason, in the following, by using the same reference numerals and characters as those used at the time of explanation of the first embodiment, reference will be made only to the contents of the addition valve control processing which is carried out in a periodic manner by the ECU 40 according to the second embodiment.

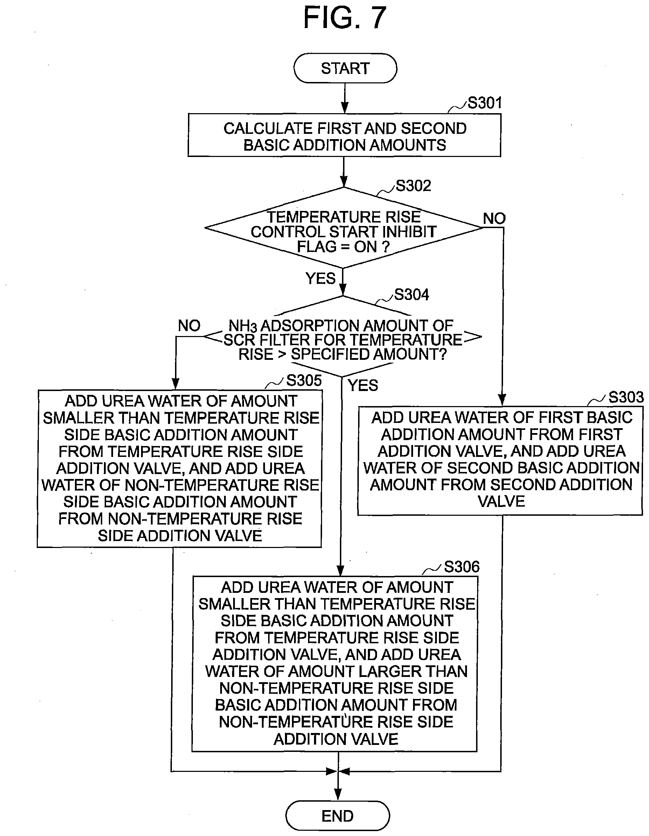

The addition valve control processing carried out in a periodic manner by the ECU 40 according to this second embodiment is the processing of procedures which are shown in Fig. 7.

The processings of steps S301 through S303, S305 and S306 in this addition valve control processing are the same as the processings of steps S201 through S203, S205 and S206 in the temperature rise control management processing (Fig. 3) according to the above-mentioned first embodiment, respectively.

The processing of step S304 is processing for determining whether the amount of ammonia desorbing from the SCR filter 22 for temperature rise within unit time has become equal to or less than the predetermined amount, similar to the processing of step S204 in the addition valve control processing according to the first embodiment. However, in step S304, as illustrated, a determination as to whether the above-mentioned amount of ammonia has become equal to or less than the predetermined amount is made, not based on whether the temperature of the SCR filter 22 for temperature rise exceeds the specified temperature, but based on whether the amount of adsorbed ammonia in the SCR filter 22 for temperature rise is less than the specified amount.

That is, as shown in Figs. 6B and 6C, the amount of ammonia desorbing from the SCR filter 22 for temperature rise within unit time (the $NH_3$ discharge amount in Fig. 6C) also correlates with the amount of adsorbed ammonia in the SCR filter 22 for temperature rise. For that reason, when an amount of adsorbed ammonia, in which the amount of ammonia desorbing from the SCR filter 22 for temperature rise within unit time becomes equal to or less than the predetermined amount (e.g., substantially "0"), is obtained and used as the specified amount, the determination as to whether the amount of ammonia desorbing from the SCR filter 22 for temperature rise within unit time has become equal to or less than the predetermined amount can be made based on the amount of adsorbed ammonia in the SCR filter 22 for temperature rise.

Accordingly, by the addition valve control (Fig. 7) of the ECU 40 according to this embodiment, too, it is possible to suppress an excessive amount of ammonia from flowing into the SCR catalyst 23 within unit time, at the time of the temperature rise control of each of the SCR filters 22.

< Modifications >

The exhaust gas purification systems according to the above-mentioned first and second embodiments can be modified in a variety of ways. For example, the exhaust gas purification system according to each embodiment is a system in which the ECU 40 functions as a temperature rise control unit, by carrying out the temperature rise control management processing (Fig. 2), and functions as an addition valve control unit, by carrying out the processings of steps S205 and S206, or the processings of steps S305 and S306, of the addition valve control processing (Fig. 3 or Fig. 4), and functions as a determination unit, by carrying out the processing of step S204 or S304 in the addition valve control processing (Fig. 3 or Fig. 4), but for example, an ECU functioning as the temperature rise control unit and an ECU functioning as the addition valve control unit and the determination unit may be provided separately from each other.

The addition valve control processing (Fig. 3, Fig. 7) may be modified to processing in which calculation processing to calculate the first and second basic addition amounts in such a manner that the total amount of adsorbed ammonia becomes the target total amount or comes close to the target total amount is carried out as appropriate; for example, processing in which in the case where the temperature rise control start inhibit flag is "off", the calculation processing is carried out, whereas in the case where the temperature rise control start inhibit flag is "on", calculation processing to calculate the first and second basic addition amounts without taking account of the total amount of adsorbed ammonia is carried out. Here, note that the calculation processing to calculate the first and second basic addition amounts without taking account of the total amount of adsorbed ammonia is processing which calculates, as the first basic addition amount and the second basic addition amount, urea water of an amount which can produce, in the first SCR filter 22a and the SCR catalyst 23, the same amount of ammonia as the amount of ammonia consumed by its reaction with NOx flowing into the first SCR filter 22a, and urea water of an amount which can produce, in the second SCR filter 22b and the SCR catalyst 23, the same amount of ammonia as the amount of ammonia consumed by its reaction with NOx flowing into the second SCR filter 22b, respectively.

In addition, the addition valve control processing may be modified to processing in which the calculation processing to be carried out is selected by other conditions (e.g., a time zone in which the calculation processing is carried out).

Moreover, the exhaust gas purification system according to each of the above embodiments is a system in which the SCR filter 22, which is a PM filter and at the same time includes an NOx selective catalytic reduction catalyst, is arranged in each of the first and second exhaust passages 15.

Accordingly, the exhaust gas purification system according to each of the above embodiments may be modified to a system in which a PM filter and an NOx selective catalytic reduction catalyst are arranged in each of the exhaust passages 15 in a mutually separated form, wherein it is managed by the temperature rise control management processing (Fig. 2) of the above-mentioned contents so that the temperature rise control of the PM filter in the first exhaust passage 15a and the temperature rise control of the PM filter in the second exhaust passage 15b are not carried out at the same time, and the first addition valve 25a and the second addition valve 25b are controlled by the addition valve control processing (Fig. 3, Fig. 7) of the above-mentioned contents. In addition, the exhaust gas purification system may also be modified to a system in which no PM filter is arranged in the first and second exhaust passages 15, for example, a system in which a DOC, an NSR catalyst, and an NOx selective catalytic reduction catalyst are arranged in each of the first and second exhaust passages 15 in this order from an upstream side thereof, wherein it is managed by the temperature rise control management processing of the above-mentioned contents so that temperature rise control to raise the temperature of the NSR catalyst in the first exhaust passage 15a for sulfur poisoning recovery and temperature rise control to raise the temperature of the NSR catalyst in the second exhaust passage 15b for sulfur poisoning recovery are not carried out at the same time, and the first addition valve 25a and the second addition valve 25b are controlled by the addition valve control processing of the above-mentioned contents.

Further, the exhaust gas purification system according to each of the above embodiments is a system in which the first exhaust passage 15a and the second exhaust passage 15b are connected to the cylinder group in the bank 11a, and the cylinder group in the bank 11b, respectively, but a cylinder group to which each of the exhaust passages 15 is connected does not need to be a cylinder group in a bank. Accordingly, the exhaust gas purification system according to each of the above embodiments may also be modified to a system in which the first exhaust passage 15a is connected to a specific cylinder group of an inline internal combustion engine (e.g., an inline six cylinder internal combustion engine), and the second exhaust passage 15b is connected to the remaining cylinder group.

Each of the above exhaust gas purification systems may be modified to a system, the specific arrangement of which is different from the above-mentioned arrangements, for example, a system in which no NOx sensor 33 is arranged in each of the exhaust passages 15, but an NOx sensor is arranged in a portion of the exhaust passage 17 upstream of the SCR catalyst 23. Moreover, as a matter of course, the calculation procedure for the amounts of adsorbed ammonia in the individual NOx reduction units (i.e., the first SCR filter 22a, the second SCR filter 22b, and the SCR catalyst 23), the calculation procedure for the amount of urea water to be added from each of the addition valves 25, and the specific control procedure for each of the addition valves 25 may be different from the above-mentioned procedures. Also, of course, a substance to be added from each of the addition valves 25 as a urea water may not need to be urea water.

[REFERENCE SIGNS LIST]

| | |
|---|---|
| 10 | internal combustion engine |
| 11a | first bank |
| 11b | second bank |
| 12 | cylinders |
| 13 | fuel injection valves |
| 15a | first exhaust passage |
| 15b | second exhaust passage |
| 16 | merging portion |
| 17 | third exhaust passage |
| 21a | first DOC |
| 21b | second DOC |
| 22a | first SCR filter |
| 22b | second SCR filter |
| 23 | SCR catalyst |

| | |
|---|---|
| 25a | first addition valve |
| 25b | second addition valve |
| 31, 32, 34 | temperature sensors |
| 33 | NOx sensors |
| 35 | PM sensor |
| 40 | ECU |

**Claims**

1. An exhaust gas purification system for an internal combustion engine (10) having a first cylinder group (11a) and a second cylinder group (11b), the system comprising:

a first exhaust passage (15a) configured for flow therethrough of an exhaust gas from the first cylinder group (11a) ;
a second exhaust passage (15b) configured for flow therethrough of an exhaust gas from the second cylinder group (11b), and which merges at a downstream side end portion thereof with a downstream side end portion of the first exhaust passage (15a);
a third exhaust passage (17) that is connected to a merging portion of the first exhaust passage (15a) and the second exhaust passage (15b);
a first SCR filter (22a) including a first NOx selective catalytic reduction catalyst that is arranged in the first exhaust passage (15a);
a second SCR filter (22b) including a second NOx selective catalytic reduction catalyst that is arranged in the second exhaust passage (15b);
a third NOx selective catalytic reduction catalyst (23) that is arranged in the third exhaust passage (17);
a first addition valve (25a) that is configured to add an ammonia source to an exhaust gas flowing into the first NOx selective catalytic reduction catalyst (22a); and
a second addition valve (25b) that is configured to add an ammonia source to an exhaust gas flowing into the second NOx selective catalytic reduction catalyst (22b); **characterized by**:

a temperature rise control unit (40) that is configured to carry out, not in the same period of time, first temperature rise control to raise the temperature of the first SCR filter (22a) arranged in the first exhaust passage (15a), and second temperature rise control to raise the temperature of the second SCR filter(22b) arranged in the second exhaust passage (15b); and
an addition valve control unit (40) that is configured to control the first addition valve (25a) and the second addition valve (25b) based on a first basic addition amount, which is a basic amount of the ammonia source to be added by the first addition valve (25a) and which is decided according to the amount of NOx flowing into the first NOx selective catalytic reduction catalyst (22a), and based on a second basic addition amount, which is a basic amount of the urea water to be added by the second addition valve (25b) and which is decided according to the amount of NOx flowing into the second NOx selective catalytic reduction catalyst (22b);

wherein the addition valve control unit (40) is configured to:

in a period of time after the first temperature rise control is started by the temperature rise control unit (40) and until an amount of ammonia desorbing from the first NOx selective catalytic reduction catalyst (22a) per unit time in accordance with the temperature rise of the first SCR filter (22a) arranged in the first exhaust passage (15a) due to the first temperature rise control becomes equal to or less than a predetermined amount, cause the first addition valve (25a) and the second addition valve (25b) to add ammonia source of an amount smaller than the first basic addition amount, and ammonia source of the second basic addition amount, respectively; and
in a period of time after the amount of ammonia desorbing per unit time becomes equal to or less than the predetermined amount and until the temperature of the first NOx selective catalytic reduction catalyst (22a) becomes less than a preset temperature at which the reduction of NOx becomes possible by the adsorption of ammonia after the first temperature rise control is terminated, cause the first addition valve (22a) and the second addition valve (22b) to add ammonia source of an amount smaller than the first basic addition amount, and ammonia source of an amount larger than the second basic addition amount, respectively.

**2.** The exhaust gas purification system for an internal combustion engine (10) as set forth in claim 1, further comprising: a determination unit (40) that is configured to determine, based on the temperature of the first NOx selective catalytic reduction catalyst (22a), whether the amount of ammonia per unit time has become equal to or less than the predetermined amount.

**3.** The exhaust gas purification system for an internal combustion engine (10) as set forth in claim 1, further comprising: a determination unit (40) that is configured to determine, based on an amount of ammonia adsorbed in the first NOx selective catalytic reduction catalyst (22a), whether the amount of ammonia per unit time has become equal to or less than the predetermined amount.

**Patentansprüche**

**1.** Abgasreinigungssystem für einen Verbrennungsmotor (10) mit einer ersten Zylindergruppe (11a) und einer zweiten Zylindergruppe (11b), wobei das System Folgendes umfasst:

einen ersten Abgaskanal (15a), der für ein Strömen eines Abgases dadurch von der ersten Zylindergruppe (11a) konfiguriert ist;
einen zweiten Abgaskanal (15b), der für ein Strömen eines Abgases dadurch von der zweiten Zylindergruppe (11b) konfiguriert ist, und der an einem Endabschnitt einer stromabwärts gelegenen Seite davon in einen Endabschnitt einer stromabwärts gelegenen Seite des ersten Abgaskanals (15a) übergeht;
einen dritten Abgaskanal (17), der mit einem Übergangsabschnitt des ersten Abgaskanals (15a) und des zweiten Abgaskanals (15b) verbunden ist;
einen ersten SCR-Filter (22a), der einen ersten NOx-Katalysator zur selektiven katalytischen Reduktion umfasst, der in dem ersten Abgaskanal (15a) angeordnet ist;
einen zweiten SCR-Filter (22b), der einen zweiten NOx-Katalysator zur selektiven katalytischen Reduktion umfasst, der in dem zweiten Abgaskanal (15b) angeordnet ist;
einen dritten NOx-Katalysator zur selektiven katalytischen Reduktion (23), der in dem dritten Abgaskanal (17) angeordnet ist;
ein erstes Zugabeventil (25a), das konfiguriert ist, um eine Ammoniakquelle zu einem Abgas hinzuzugeben, das in den ersten NOx-Katalysator zur selektiven katalytischen Reduktion (22a) strömt; und
ein zweites Zugabeventil (25b), das konfiguriert ist, um eine Ammoniakquelle zu einem Abgas hinzuzugeben, das in den zweiten NOx-Katalysator zur selektiven katalytischen Reduktion (22b) strömt; **gekennzeichnet durch**:

eine Temperaturanstiegssteuereinheit (40), die konfiguriert ist, um nicht in demselben Zeitraum eine erste Temperaturanstiegssteuerung auszuführen, um die Temperatur des ersten SCR-Filters (22a) zu erhöhen, der in dem ersten Abgaskanal (15a) angeordnet ist, und eine zweite Temperaturanstiegssteuerung auszuführen, um die Temperatur des zweiten SCR-Filters (22b) zu erhöhen, der in dem zweiten Abgaskanal (15b) angeordnet ist; und
eine Zugabeventilsteuereinheit (40), die konfiguriert ist, um das erste Zugabeventil (25a) und das zweite Zugabeventil (25b) basierend auf einer ersten Zugabegrundmenge zu steuern, die eine Grundmenge der Ammoniakquelle ist, die durch das erste Zugabeventil (25a) hinzugegeben werden soll und die gemäß der Menge von NOx, die in den ersten NOx-Katalysator zur selektiven katalytischen Reduktion (22a) strömt, bestimmt wird, und basierend auf einer zweiten Zugabegrundmenge zu steuern, die eine Grundmenge des Harnstoffwassers ist, die durch das zweite Zugabeventil (25b) hinzugegeben werden soll und die gemäß der Menge von NOx, die in den zweiten NOx-Katalysator zur selektiven katalytischen Reduktion (22b) strömt, bestimmt wird;

wobei die Zugabeventilsteuereinheit (40) zu Folgendem konfiguriert ist:

in einem Zeitraum, nachdem die erste Temperaturanstiegssteuerung durch die Temperaturanstiegssteuereinheit (40) gestartet ist und bis eine Menge von Ammoniak, die von dem ersten NOx-Katalysator zur selektiven katalytischen Reduktion (22a) pro Zeiteinheit gemäß dem Temperaturanstieg des ersten SCR-Filters (22a), der in dem ersten Abgaskanal (15a) angeordnet ist, aufgrund der ersten Temperaturanstiegssteuerung desorbiert, gleich oder weniger als eine vorbestimmte Menge wird, Veranlassen, dass das erste Zugabeventil (25a) und das zweite Zugabeventil (25b) jeweils Ammoniakquelle einer Menge, die kleiner als die erste Zugabegrundmenge ist, und Ammoniakquelle der zweiten Zugabegrundmenge hinzugeben;

und

in einem Zeitraum, nachdem die Menge von Ammoniak, die pro Zeiteinheit desorbiert, gleich oder weniger als die vorbestimmte Menge wird und bis die Temperatur des ersten NOx-Katalysators zur selektiven katalytischen Reduktion (22a) weniger als eine voreingestellte Temperatur wird, bei der die Reduktion von NOx durch die Adsorption von Ammoniak möglich wird, nachdem die erste Temperaturanstiegssteuerung beendet ist, Veranlassen, dass das erste Zugabeventil (22a) und das zweite Zugabeventil (22b) jeweils Ammoniakquelle einer Menge, die kleiner als die erste Zugabegrundmenge ist, und Ammoniakquelle einer Menge hinzugeben, die größer als die zweite Zugabegrundmenge ist.

**2.** Abgasreinigungssystem für einen Verbrennungsmotor (10) nach Anspruch 1, ferner umfassend:
eine Bestimmungseinheit (40), die konfiguriert ist, um basierend auf der Temperatur des ersten NOx-Katalysators zur selektiven katalytischen Reduktion (22a) zu bestimmen, ob die Menge von Ammoniak pro Zeiteinheit gleich oder weniger als die vorbestimmte Menge wurde.

**3.** Abgasreinigungssystem für einen Verbrennungsmotor (10) nach Anspruch 1, ferner umfassend:
eine Bestimmungseinheit (40), die konfiguriert ist, um basierend auf einer Menge von Ammoniak, die in dem ersten NOx-Katalysator zur selektiven katalytischen Reduktion (22a) adsorbiert wird, zu bestimmen, ob die Menge von Ammoniak pro Zeiteinheit gleich oder weniger als die vorbestimmte Menge wurde.

**Revendications**

**1.** Système d'épuration de gaz d'échappement pour un moteur à combustion interne (10) possédant un premier groupe de cylindres (11a) et un second groupe de cylindres (11b), le système comprenant :

un premier passage d'échappement (15a) configuré pour l'écoulement à travers celui-ci d'un gaz d'échappement à partir du premier groupe de cylindres (11a) ;
un deuxième passage d'échappement (15b) configuré pour l'écoulement à travers celui-ci d'un gaz d'échappement à partir du second groupe de cylindres (11b), et qui fusionne, au niveau d'une portion d'extrémité latérale aval de celui-ci, avec une portion d'extrémité latérale aval du premier passage d'échappement (15a) ;
un troisième passage d'échappement (17) qui est raccordé à une portion de fusionnement du premier passage d'échappement (15a) et du deuxième passage d'échappement (15b) ;
un premier filtre SCR (22a) incluant un premier catalyseur de réduction catalytique sélective de NOx qui est agencé dans le premier passage d'échappement (15a) ;
un second filtre SCR (22b) incluant un deuxième catalyseur de réduction catalytique sélective de NOx qui est agencé dans le deuxième passage d'échappement (15b) ;
un troisième catalyseur de réduction catalytique sélective de NOx (23) qui est agencé dans le troisième passage d'échappement (17) ;
une première soupape d'ajout (25a) qui est configurée pour ajouter une source d'ammoniac à un gaz d'échappement s'écoulant dans le premier catalyseur de réduction catalytique sélective de NOx (22a) ; et
une seconde soupape d'ajout (25b) qui est configurée pour ajouter une source d'ammoniac à un gaz d'échappement s'écoulant dans le deuxième catalyseur de réduction catalytique sélective de NOx (22b) ; **caractérisé par** :

une unité de commande d'augmentation de température (40) qui est configurée pour exécuter, non dans la même période, une première commande d'augmentation de température pour augmenter la température du premier filtre SCR (22a) agencé dans le premier passage d'échappement (15a), et une seconde commande d'augmentation de température pour augmenter la température du second filtre SCR (22b) agencé dans le deuxième passage d'échappement (15b) ; et
une unité de commande de soupape d'ajout (40) qui est configurée pour commander la première soupape d'ajout (25a) et la seconde soupape d'ajout (25b) sur la base d'une première quantité d'ajout de base, qui est une quantité de base de la source d'ammoniac destinée à être ajoutée par la première soupape d'ajout (25a) et qui est décidée selon la quantité de NOx s'écoulant dans le premier catalyseur de réduction catalytique sélective de NOx (22a), et sur la base d'une seconde quantité d'ajout de base, qui est une quantité de base de l'eau d'urée destinée à être ajoutée par la seconde soupape d'ajout (25b) et qui est décidée selon la quantité de NOx s'écoulant dans le deuxième catalyseur de réduction catalytique sélective de NOx (22b) ;

EP 3 130 774 B1

dans lequel l'unité de commande de soupape d'ajout (40) est configurée pour :

dans une période après que la première commande d'augmentation de température est commencée par l'unité de commande d'augmentation de température (40) et jusqu'à ce qu'une quantité d'ammoniac se désorbant du premier catalyseur de réduction catalytique sélective de NOx (22a) par unité de temps conformément à l'augmentation de température du premier filtre SCR (22a), agencé dans le premier passage d'échappement (15a), due à la première commande d'augmentation de température soit égale ou inférieure à une quantité prédéterminée, faire en sorte que la première soupape d'ajout (25a) et la seconde soupape d'ajout (25b) ajoutent une source d'ammoniac d'une quantité inférieure à la première quantité d'ajout de base, et une source d'ammoniac de la seconde quantité d'ajout de base, respectivement ; et
dans une période après que la quantité d'ammoniac se désorbant par unité de temps est égale ou inférieure à la quantité prédéterminée et jusqu'à ce que la température du premier catalyseur de réduction catalytique sélective de NOx (22a) soit inférieure à une température prédéfinie à laquelle la réduction de NOx devient possible par l'adsorption d'ammoniac après que la première commande d'augmentation de température est terminée, faire en sorte que la première soupape d'ajout (22a) et la seconde soupape d'ajout (22b) ajoutent une source d'ammoniac d'une quantité inférieure à la première quantité d'ajout de base, et une source d'ammoniac d'une quantité supérieure à la seconde quantité d'ajout de base, respectivement.

2. Système d'épuration de gaz d'échappement pour un moteur à combustion interne (10) selon la revendication 1, comprenant en outre :
une unité de détermination (40) qui est configurée pour déterminer, sur la base de la température du premier catalyseur de réduction catalytique sélective de NOx (22a), si la quantité d'ammoniac par unité de temps est devenue égale ou inférieure à la quantité prédéterminée.

3. Système d'épuration de gaz d'échappement pour un moteur à combustion interne (10) selon la revendication 1, comprenant en outre :
une unité de détermination (40) qui est configurée pour déterminer, sur la base d'une quantité d'ammoniac adsorbée dans le premier catalyseur de réduction catalytique sélective de NOx (22a), si la quantité d'ammoniac par unité de temps est devenue égale ou inférieure à la quantité prédéterminée.

# FIG. 1

EP 3 130 774 B1

# FIG. 2

START

S101
OBTAIN PM DEPOSITION AMOUNT
OF EACH SCR FILTER

S102
TEMPERATURE RISE
CONTROL START INHIBIT
FLAG = ON ?
NO
YES

S110
DURING EXECUTION
OF TEMPERATURE RISE
CONTROL?
YES
NO

S111
PM DEPOSITION AMOUNT OF
SCR FILTER FOR TEMPERATURE
RISE < TEMPERATURE RISE
TERMINATION AMOUNT ?
NO
YES

S113
TEMP OF SCR FILTER
FOR TEMPERATURE RISE <
PRESET TEMP?
NO
YES

S112
TERMINATE TEMPERATURE RISE
CONTROL UNDER EXECUTION

S114
TEMPERATURE RISE CONTROL
START INHIBIT FLAG ← OFF

S103
FIRST PM DEPOSITION
AMOUNT > TEMPERATURE RISE
START AMOUNT?
NO
YES

S105
SECOND PM DEPOSITION
AMOUNT > TEMPERATURE RISE
START AMOUNT ?
NO
YES

S104
START FIRST TEMPERATURE
RISE CONTROL

S106
START SECOND TEMPERATURE
RISE CONTROL

S107
TEMPERATURE RISE CONTROL
START INHIBIT FLAG ← ON

END

# FIG. 3

START

S201
CALCULATE FIRST AND SECOND
BASIC ADDITION AMOUNTS

S202
TEMPERATURE RISE
CONTROL START INHIBIT
FLAG = ON?

NO

YES

S204
TEMP OF SCR FILTER
FOR TEMPERATURE RISE >
SPECIFIED TEMP?

NO

YES

S205
ADD UREA WATER OF AMOUNT
SMALLER THAN TEMPERATURE RISE
SIDE BASIC ADDITION AMOUNT
FROM TEMPERATURE RISE SIDE
ADDITION VALVE, AND ADD UREA
WATER OF NON-TEMPERATURE RISE
SIDE BASIC ADDITION AMOUNT
FROM NON-TEMPERATURE RISE
SIDE ADDITION VALVE

S203
ADD UREA WATER OF FIRST BASIC
ADDITION AMOUNT FROM FIRST
ADDITION VALVE, AND ADD UREA
WATER OF SECOND BASIC ADDITION
AMOUNT FROM SECOND ADDITION
VALVE

S206
ADD UREA WATER OF AMOUNT
SMALLER THAN TEMPERATURE RISE
SIDE BASIC ADDITION AMOUNT
FROM TEMPERATURE RISE SIDE
ADDITION VALVE, AND ADD UREA
WATER OF AMOUNT LARGER THAN
NON-TEMPERATURE RISE SIDE
BASIC ADDITION AMOUNT FROM
NON-TEMPERATURE RISE SIDE
ADDITION VALVE

END

EP 3 130 774 B1

# FIG. 4

# FIG. 5

TEMP RISE BY ONE BANK

TEMP RISE BY BOTH BANKS

NOx REDUCTION RATE

SCR TEMPERATURE (℃)

200    400    600

# FIG.6

(a) — TEMPERATURE vs TIME
FIRST TEMPERATURE RISE CONTROL START
FIRST SCR FILTER
SPECIFIED TEMP
SCR CATALYST
SECOND SCR FILTER

(b) — $NH_3$ ADSORPTION AMOUNT vs TIME
SECOND SCR FILTER
SCR CATALYST
SPECIFIED AMOUNT
FIRST SCR FILTER

(c) — $NH_3$ DISCHARGE AMOUNT vs TIME
FIRST SCR FILTER
SCR CATALYST (SIMULTANEOUS INCREASE OF UREA WATER)
SCR CATALYST (DELAYED INCREASE OF UREA WATER)

(d) — $NH_3$ SOURCE ADDITION AMOUNT vs TIME
SECOND ADDITION VALVE
FIRST AND SECOND BASIC ADDITION AMOUNT
FIRST ADDITION VALVE

# FIG. 7

START

S301
CALCULATE FIRST AND SECOND
BASIC ADDITION AMOUNTS

S302
TEMPERATURE RISE
CONTROL START INHIBIT
FLAG = ON ?    NO

YES

S304
NH3 ADSORPTION AMOUNT OF
SCR FILTER FOR TEMPERATURE
RISE > SPECIFIED AMOUNT?
NO                                    YES

S305
ADD UREA WATER OF AMOUNT
SMALLER THAN TEMPERATURE RISE
SIDE BASIC ADDITION AMOUNT
FROM TEMPERATURE RISE SIDE
ADDITION VALVE, AND ADD UREA
WATER OF NON-TEMPERATURE RISE
SIDE BASIC ADDITION AMOUNT
FROM NON-TEMPERATURE RISE
SIDE ADDITION VALVE

S303
ADD UREA WATER OF FIRST BASIC
ADDITION AMOUNT FROM FIRST
ADDITION VALVE, AND ADD UREA
WATER OF SECOND BASIC ADDITION
AMOUNT FROM SECOND ADDITION
VALVE

S306
ADD UREA WATER OF AMOUNT
SMALLER THAN TEMPERATURE RISE
SIDE BASIC ADDITION AMOUNT
FROM TEMPERATURE RISE SIDE
ADDITION VALVE, AND ADD UREA
WATER OF AMOUNT LARGER THAN
NON-TEMPERATURE RISE SIDE
BASIC ADDITION AMOUNT FROM
NON-TEMPERATURE RISE SIDE
ADDITION VALVE

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2787186 A
- EP 1852582 A
- JP 2013113194 A